(19) Europäisches Patentamt / European Patent Office / Office européen des brevets

(11) EP 3 264 243 A1

(12) **EUROPEAN PATENT APPLICATION**
published in accordance with Art. 153(4) EPC

(43) Date of publication:
03.01.2018 Bulletin 2018/01

(51) Int Cl.:
*G06F 3/044* (2006.01)          *G06F 3/041* (2006.01)

(21) Application number: 16755715.6

(22) Date of filing: 26.02.2016

(86) International application number:
PCT/JP2016/055902

(87) International publication number:
WO 2016/136971 (01.09.2016 Gazette 2016/35)

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 27.02.2015 JP 2015038660
27.10.2015 JP 2015210477

(71) Applicant: Fujikura Ltd.
Tokyo 135-8512 (JP)

(72) Inventors:
• SHIOJIRI, Takeshi
  Sakura-shi,
  Chiba 285-8550 (JP)
• OGURA, Shingo
  Sakura-shi,
  Chiba 285-8550 (JP)

(74) Representative: **Ter Meer Steinmeister & Partner Patentanwälte mbB**
**Artur-Ladebeck-Strasse 51**
**33617 Bielefeld (DE)**

(54) **TOUCH SENSOR WIRING BODY, TOUCH SENSOR WIRING SUBSTRATE, AND TOUCH SENSOR**

(57) A wiring body (3) for a touch sensor includes: a first resin layer (31); a first conductor layer (32) provided on the first resin layer (31) and including first conductor lines (322); a second resin layer (33) covering the first conductor layer (32); and a second conductor layer (34) provided above the first conductor layer (32) via the second resin layer (33) and including second conductor lines (342). The first and second conductor layers (32) and (34) are electrically insulated by the second resin layer (33). A following Expression (1) is satisfied: $D_1 < D_2$ ...(1). In the above Expression (1), $D_1$ is a thickness of the first resin layer (31) in a first region corresponding to a first conductor line (322) in a first predetermined cross-section that crosses the wiring body (3) along a second conductor line (342), and $D_2$ is a thickness of the second resin layer (33) in the first region of the first predetermined cross-section.

Fig.4

EP 3 264 243 A1

**Description**

[Technical Field]

The present invention relates to a wiring body for a touch sensor, a wiring board for a touch sensor, and a touch sensor.
The contents of Patent Application No. 2015-038660, filed with Japan Patent Office on February 27, 2015 and Patent Application No. 2015-210477, filed with Japan Patent Office on October 27, 2015 are incorporated herein by reference in the designated countries in which the incorporation by reference is accepted.

[Background Art]

A conductive structure including two conductive layers and a touch sensor such as a touch panel are known in which a first conductive layer is formed on a resin layer as a transparent substrate, a transparent polymer layer is then provided thereon, and a second conductive layer is formed on the transparent polymer layer (see Patent Document 1, for example).

[Prior Art Document]

[Patent Document]

[Patent Document 1] Japanese Translation of PCT International Application, No. 2015-501502

[Summary of Invention]

[Problems to be solved by Invention]

In multi-touch capacitance-type touch sensors and the like, two layers of conductive layers (electrodes) are required in a wiring body. The touch sensor of the above prior art captures the change in capacitance between the electrodes when a contact body such as a finger gets into touch with the touch sensor, thereby to detect a position or the like at which the contact body comes into contact. In the touch sensor of the above prior art, however, if the transparent polymer layer between the first and second conductive layers in the wiring body is thin, the line of electric force released is closed between the electrodes even when the contact body gets into touch with the touch sensor and, unfortunately, the touch sensor cannot readily react to the contact body. This will result in the deterioration of electric characteristics, such as degradation of the sensitivity, and the touch sensor may not function as a wiring body having two conductive layers. If, on the other hand, the distance between two conductive layers is made long, the above deterioration of electric characteristics will not readily occur, but the film thickness may increase to hinder the production of thinner products.
Problems to be solved by the present invention include providing a wiring body for a touch sensor which can reduce the film thickness as a whole while functioning well as a wiring body having two or more conductive layers, and providing a wiring board for a touch sensor and a touch sensor.

[Means for solving problems]

<1> The wiring body for a touch sensor according to the present invention comprises: a first resin layer; a first conductor layer provided on the first resin layer and including a first conductor line, a second resin layer covering the first conductor layer; and a second conductor layer provided above the first conductor layer via the second resin layer and including a second conductor line, wherein a following Expression (1) is satisfied:

$$D_1 < D_2 \ \ldots (1).$$

In the above Expression (1), $D_1$ is a thickness of the first resin layer in a first region corresponding to the first conductor line in a first predetermined cross-section that crosses the wiring body along the second conductor line, and $D_2$ is a thickness of the second resin layer in the first region of the first predetermined cross-section.
<2> In the above technique, the thickness $D_1$ may be 0.5 to 100 $\mu$m, and the thickness $D_2$ may be 30 to 500 $\mu$m.

<3> In the above technique, the wiring body for the touch sensor may further comprise a third resin layer covering the second conductor layer, and a following Expression (2) may be satisfied:

$$D_3 < D_2 \ \ldots(2).$$

In the above Expression (2), $D_3$ is a thickness of the third resin layer in the first region of the first predetermined cross-section.

<4> In the above technique, a following Expression (3) below may be satisfied:

$$T_1 \leq D_2 \leq 125T_1 \ \ldots(3).$$

In the above Expression (3), $T_1$ is a thickness of the first conductor line in the first predetermined cross-section.

<5> In the above technique, the second resin layer may have a relative permittivity of 3.0 to 4.0.

<6> In the above technique, a surface of the first conductor line at the second conductor line side may be flat.

<7> In the above technique, a following Expression (4) may be satisfied:

$$|H_1 - H_2| < T_1/3 \ \ldots(4).$$

In the above Expression (4), $H_1$ is a maximum height of the second conductor line in the first region of the first predetermined cross-section, $H_2$ is a minimum height of the second conductor line in a second region that is adjacent to the first region and has the same width as that of the first region in the first predetermined cross-section, and $T_1$ is a thickness of the first conductor line in the first predetermined cross-section.

<8> In the above technique, the first conductor line may have a tapered shape that narrows toward the second conductor layer side, and the second conductor line may have a tapered shape that narrows toward the side departing from the first conductor layer.

<9> In the above technique, the surface roughness of a surface of the first conductor line opposite to a first facing surface facing the second conductor line may be rougher than the surface roughness of the first facing surface, and the surface roughness of a second facing surface of the second conductor line facing the first conductor line may be rougher than the surface roughness of a surface opposite to the second facing surface.

<10> In the above technique, the first conductor layer may have a first electrode pattern that includes the first conductor line and extends along a predetermined direction, the second conductor layer may have a second electrode pattern that includes the second conductor line and extends along a direction crossing the predetermined direction, the first electrode pattern may have a width of 3 to 10 mm, and the second electrode pattern may have a width of 0.5 to 2 mm.

<11> In the above technique, a surface area of a region at which the first electrode pattern and the second electrode pattern overlap each other in a plan view may be 3 to 12 mm$^2$.

<12> The wiring board for the touch sensor according to the present invention comprises the above wiring body for the touch sensor, and a support body supporting the wiring body for the touch sensor.

<13> The touch sensor according to the present invention comprises the wiring board for the touch sensor in the above technique.

[Effect of Invention]

According to the present invention, the wiring body for a touch sensor satisfies the above Expression (1). This allows the second resin layer to be thicker than the first resin layer and allows the distance between the first conductor line and the second conductor line to be long. The wiring body for a touch sensor can therefore prevent the deterioration of electric characteristics despite having two conductive layers and can function well as a wiring body for a touch sensor having two or more conductive layers. Moreover, the film thickness of the wiring body for a touch sensor as a whole can be reduced, because the first resin layer is thinner than the second resin layer.

[Brief Description of Drawings]

FIG. 1 is a perspective view illustrating a wiring board for a touch sensor in an embodiment of the present invention.

FIG. 2 is a plan view illustrating a first conductor layer in an embodiment of the present invention.

FIG. 3 is a plan view illustrating a second conductor layer in an embodiment of the present invention.

FIG. 4 is a cross-sectional view along line IV-IV of FIG. 3.

FIG. 5 is a cross-sectional view along line V-V of FIG. 3.

FIG. 6 is a cross-sectional view along line VI-VI of FIG. 3.

FIG. 7 is a view for describing a first conductor layer in an embodiment of the present invention.

FIG. 8 is a cross-sectional view illustrating a modified example in an embodiment of the present invention, that is, a cross-sectional view corresponding to FIG. 4.

FIG. 9(A) to FIG. 9(J) are cross-sectional views for describing a production method for a wiring board for a touch sensor in an embodiment of the present invention.

FIG. 10 is a plan view illustrating modified examples of first and second conductor layers in an embodiment of the present invention.

[Mode(s) for Carrying out the Invention]

Hereinafter, one or more embodiments of the present invention will be described with reference to the drawings.

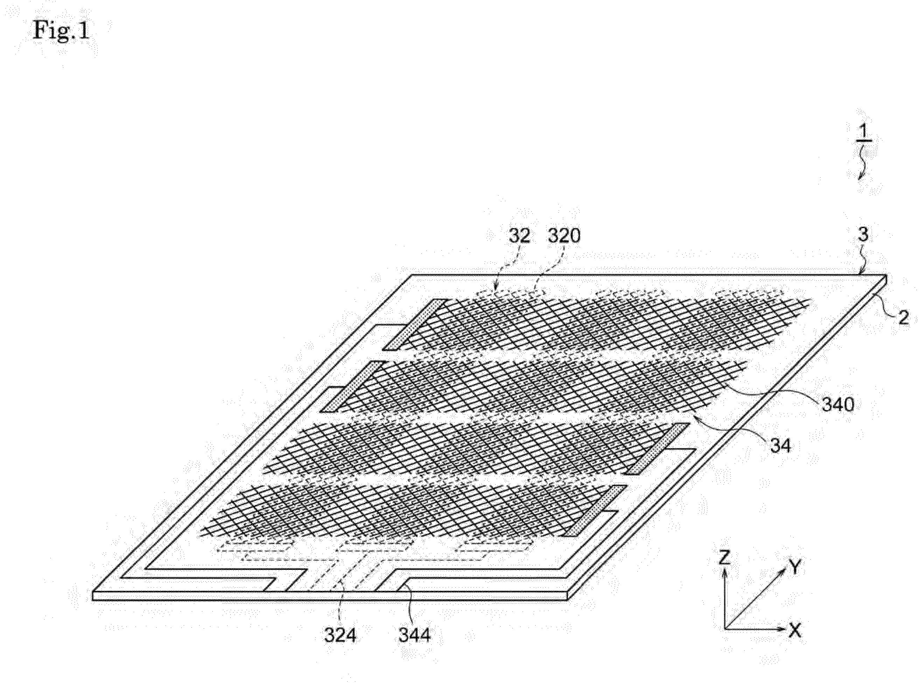

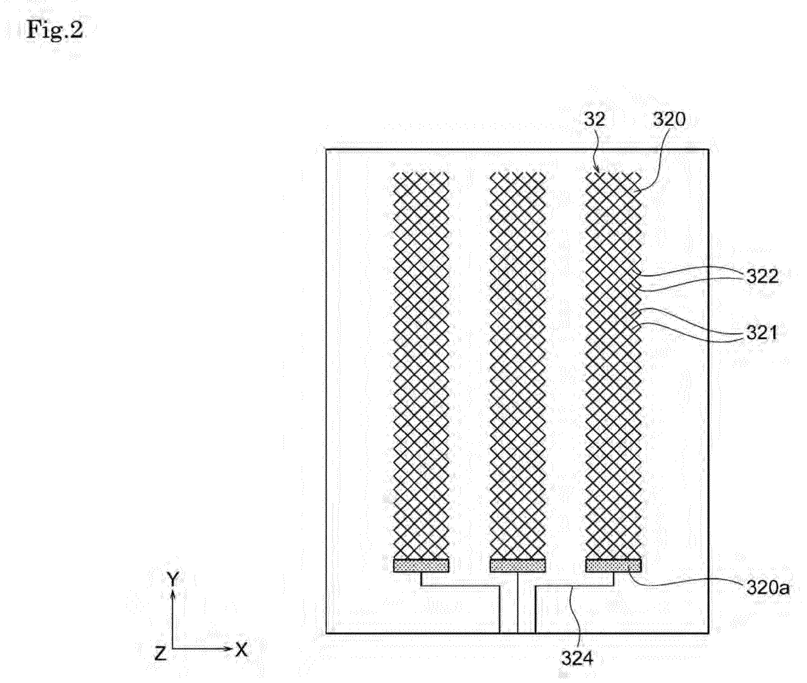

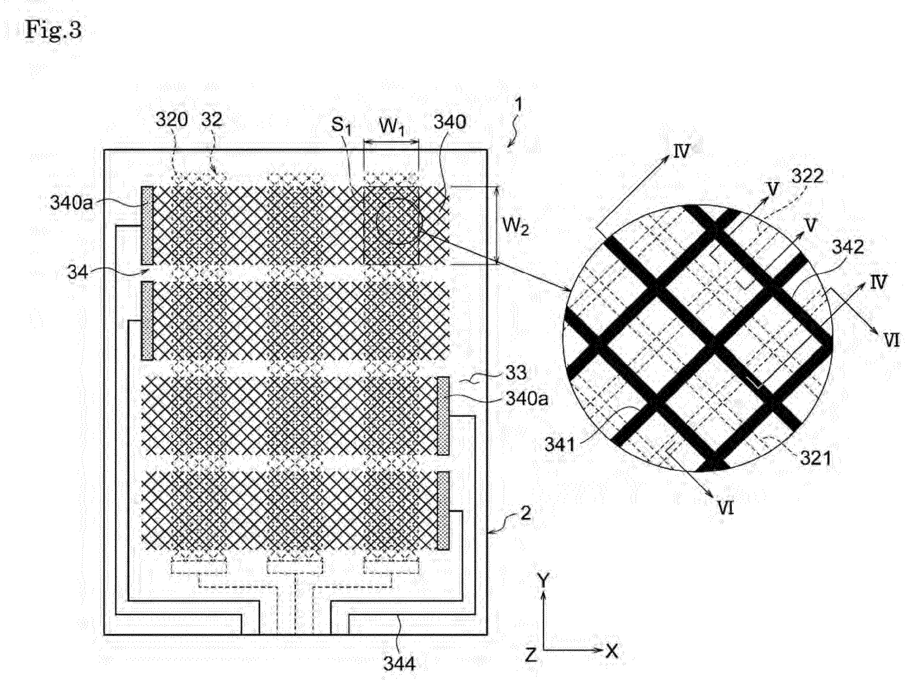

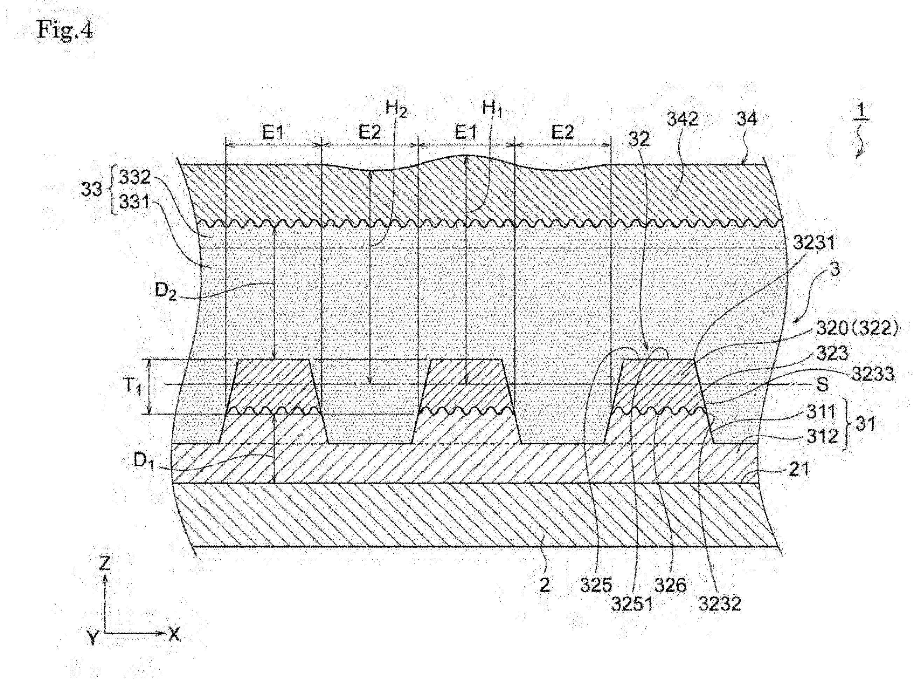

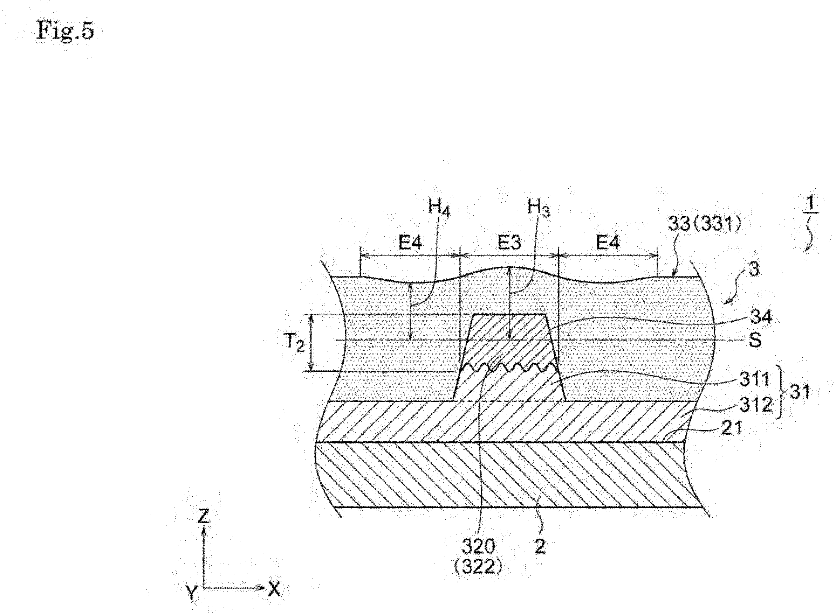

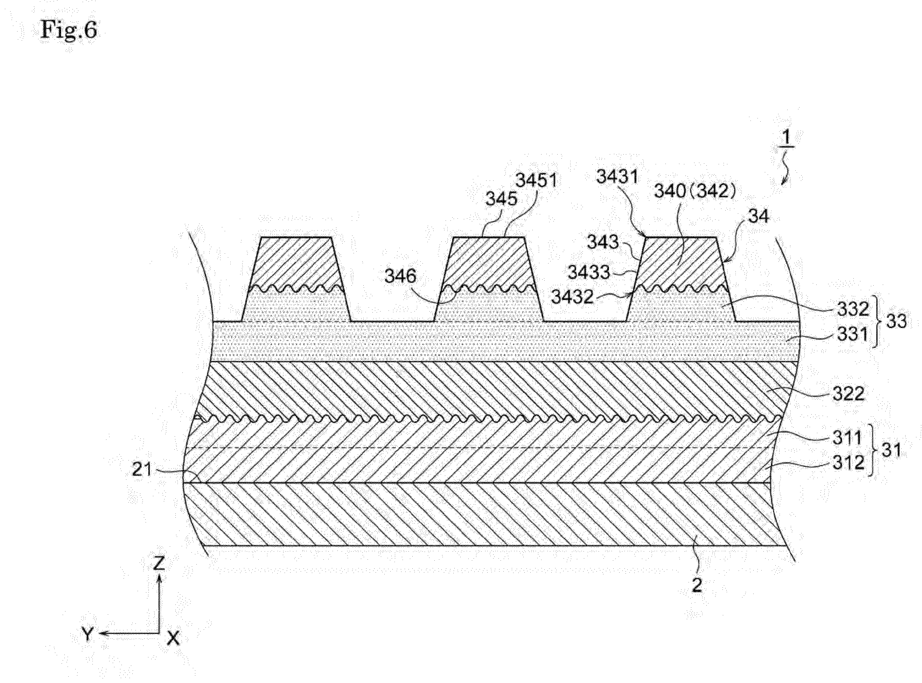

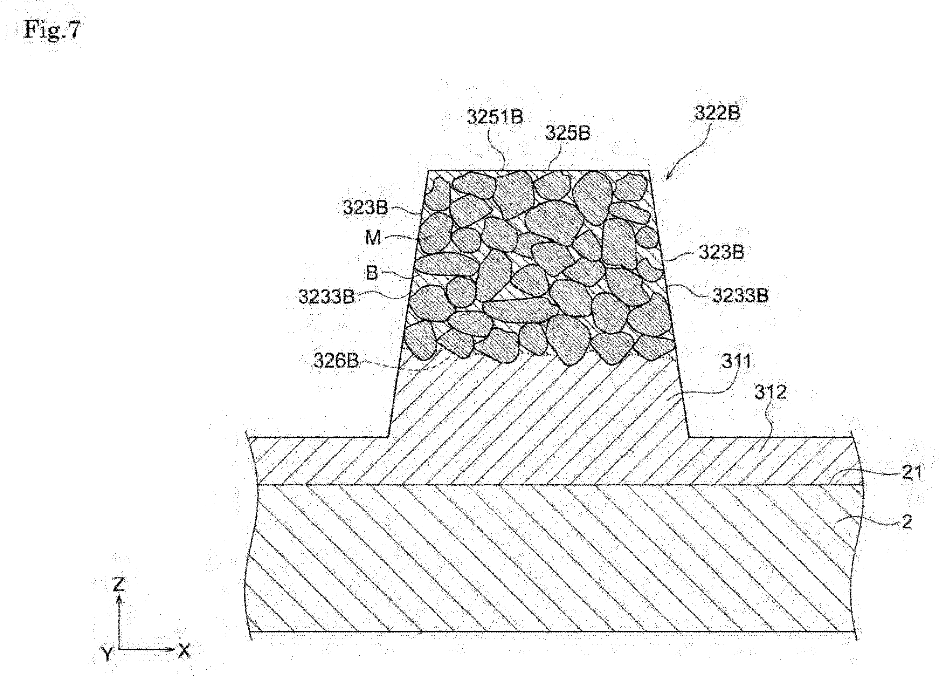

FIG. 1 is a perspective view illustrating a wiring board for a touch sensor in an embodiment of the present invention, FIG. 2 is a plan view illustrating a first conductor layer in an embodiment of the present invention, FIG. 3 is a plan view illustrating a second conductor layer in an embodiment of the present invention, FIG. 4 is a cross-sectional view along line IV-IV of FIG. 3, FIG. 5 is a cross-sectional view along line V-V of FIG. 3, FIG. 6 is a cross-sectional view along line VI-VI of FIG. 3, and FIG. 7 is a view for describing a first conductor layer in an embodiment of the present invention.

Wiring board 1 for a touch sensor in the present embodiment is used as an electrode base material in a touch sensor such as a touch panel and touch pad of a capacitance-type or the like and, as illustrated in FIGS 1 to 3, comprises a substrate 2 and a wiring body 3 for a touch sensor. The wiring body 3 for a touch sensor is disposed on the substrate 2. The wiring body 3 for a touch sensor comprises a first resin layer 31, a first conductor layer 32, a second resin layer 33, and a second conductor layer 34. Such a wiring board 1 for a touch sensor is used as an input device having a function to detect a touch position, for example, in combination with a display device (not illustrated). The display device is not particularly limited, and a liquid crystal display, organic EL display, electronic paper, or the like can be used.

Examples of a touch sensor using the wiring board 1 for a touch sensor include a projected capacitance-type touch sensor. In such a touch sensor, one of first and second electrodes 32 and 34 that are disposed to face each other is used as a detection electrode and the other is used as a drive electrode, and an external circuit (not illustrated) periodically applies a predetermined voltage between these two electrodes. When the finger of an operator (external conductor) comes close to the touch sensor, for example, a capacitor (capacitance) is formed between the external conductor and the touch sensor to change the electrical state between the two electrodes. The touch sensor can detect an operation position of the operator on the basis of the electrical change between the two electrodes.

The substrate 2 has a rectangular shape as illustrated in FIG. 1 and is a transparent base material through which visible light can transmit and which supports the wiring body 3 for a touch sensor. Examples of a material that constitutes such a substrate 2 include polyethylene terephthalate (PET), polyethylene naphthalate (PEN), polyimide resin (PI), polyetherimide resin (PEI), polycarbonate (PC), polyether ether ketone (PEEK), liquid-crystal polymer (LCP), cycloolefin polymer (COP), silicone resin (SI), acrylic resin, phenol resin, epoxy resin, and glass. The substrate 2 may be formed with an easy-adhesion layer and/or an optical adjustment layer. The shape of the substrate 2 is not particularly limited. The substrate 2 in the present embodiment corresponds to an example of the "support body" in the present invention.

The first resin layer 31 is a layer through which visible light can transmit and which adheres to the substrate 2 and the first conductor layer 32 to fix them to each other. As illustrated in FIG. 4 or FIG. 5, the first resin layer 31 is provided on the entire area of a main surface 21 of the substrate 2. Examples of an adhesive material that constitutes the first resin layer 31 include a UV-curable resin, a thermoset resin, and a thermoplastic resin, such as an epoxy resin, acrylic resin, polyester resin, urethane resin, vinyl resin, silicone resin, phenol resin, and polyimide resin. As illustrated in FIG. 4, the first resin layer 31 has: support parts 311 that support first conductor lines 322 (which will be described later); and a flat plate-like part 312 that is provided between the support parts 311 and the main surface 21 of the substrate 2 and covers the main surface 21. The support parts 311 and the flat plate-like part 312 are formed integrally.

As illustrated in FIG. 4, cross-sectional shapes of the support parts 311 (cross-sectional shapes with respect to the extending direction of first conductor lines 322 (which will be described later)) in the present embodiment are each a shape that narrows toward a direction departing from the substrate 2 (+Z-direction in FIG. 2). Boundaries between the support parts 311 and the first conductor lines 322 are in uneven (irregular) shapes corresponding to uneven shapes of lower surfaces 326 of the first conductor lines 322. Such uneven shapes are formed due to the surface roughness of the lower surfaces 326 of the first conductor lines 322. As illustrated in FIG. 6, the boundary between each support part 311 and each first conductor line 322 in the cross-section along the extending direction of the first conductor line 322 is also in an uneven shape corresponding to the uneven shape of the lower surface 326 of the first conductor line 322. The surface roughness of the lower surfaces 326 will be described later in detail. For easy understanding of the wiring body 3 for a touch sensor in the present embodiment, FIG. 4 and FIG. 6 illustrate the uneven shapes of boundaries between the support parts 311 and the first conductor lines 322 in an exaggerated manner. Although not particularly illustrated, like the boundaries between the support parts and the first conductor lines 322, boundaries between support parts and first conductor lines 321 to be described later are also in uneven shapes corresponding to the uneven shapes of lower surfaces of the first conductor lines 321.

The flat plate-like part 312 is provided on the entire area of the main surface 21 of the substrate 2 at its approximately uniform height (thickness). The thickness of the flat plate-like part 312 is not particularly limited, but can be set within a range of 5 $\mu$m to 100 $\mu$m. Providing the support parts 311 on the flat plate-like part 312 allows the first resin layer 31 to protrude at the support parts 311, and the rigidity of the first conductor lines 322 is improved with the support parts 311.

The flat plate-like part 312 may be omitted from the first resin layer 31, and the first resin layer 31 may consist only of the support parts 311. This may improve the optical transparency of the wiring board 1 for a touch sensor as a whole, and the visibility can thus be improved in a touch panel or the like that is equipped with the wiring board 1 for a touch sensor.

The first conductor layer 32 is a layer that functions, for example, as electrodes of a touch sensor and lead wires connected electrically to the electrodes. Such a first conductor layer 32 may be made of a conductive material (conductive particles) and a binder resin. Examples of the conductive material include a metal material, such as silver, copper, nickel, tin, bismuth, zinc, indium, and palladium; and a carbon-based material, such as graphite, carbon black (furnace black, acetylene black, Ketjen black), carbon nanotube, and carbon nanofiber. Metal salt may also be used as the conductive material. Examples of the metal salt include salts of the above-described metals.

Conductive particles that can be used as the conductive particles included in the first conductor layer 32 may have, for example, a diameter $\varphi$ of 0.5 $\mu$m to 2 $\mu$m (0.5 $\mu$m$\leq\varphi\leq$2 $\mu$m) in accordance with the widths of conductor patterns to be formed (first conductor lines 321 and 322 and lead wires 324 (both will be described later)). From the viewpoint of stabilizing the electric resistance value of the first conductor layer 32, it is preferred to use conductive particles having an average diameter $\varphi$ that is not larger than half the width of a conductor pattern to be formed. It may be preferred to use particles of which the specific surface area as measured by a BET method is 20 m$^2$/g or more, as the conductive particles.

When the first conductor layer 32 is required to have a relatively small electric resistance value that is not larger than a certain level, it is preferred to use a metal material as the conductive material, while when the first conductor layer 32 is accepted to have a relatively large electric resistance value that is not smaller than a certain level, a carbon-based material can be used as the conductive material. From the viewpoint of improving the haze and total light reflectance of a mesh film, it is preferred to use a carbon-based material.

In the present embodiment, first electrode patterns 320 are formed into a net-like shape to give optical transparency. In this case, conductive materials that are excellent in the conductivity but opaque, such as silver, copper, nickel and other metal materials and the above-described carbon-based materials, (opaque metal materials and opaque carbon-based materials) can be used as a constitutional material of the first electrode patterns 320.

Examples of the binder resin include acrylic resin, polyester resin, epoxy resin, vinyl resin, urethane resin, phenol resin, polyimide resin, silicone resin, and fluorine resin.

The first conductor layer 32 as the above may be formed by applying a conductive paste and curing it. Specific examples of such a conductive paste include a conductive paste that is composed by mixing the above-described conductive material and binder resin with water or solvent and various additives. Examples of the solvent contained in the conductive paste include $\alpha$-terpineol, butyl carbitol acetate, butyl carbitol, 1-decanol, butyl cellosolve, diethylene glycol monoethyl ether acetate, and tetradecane. The binder resin may be omitted from the materials which constitute the first conductor layer 32.

As illustrated in FIG. 2, the first conductor layer 32 in the present embodiment has the first electrode patterns 320, which extend along the Y-axis direction in FIG. 2, and lead wiring layers 324 that are connected to the first electrode patterns 320. In the present embodiment, three first electrode patterns 320 are arranged approximately at regular intervals along the X-axis direction in FIG. 2. The number and arrangement of the first electrode patterns 320 included in the first conductor layer 32 are not particularly limited to the above.

The first electrode patterns 320 each have first conductor lines 321 and 322. As illustrated in FIG. 2, the first conductor lines 321 extend in a linear fashion and the first conductor lines 322 also extend in a linear fashion. A plurality of the first conductor lines 321 is arranged approximately at regular intervals to be located side by side parallel to one another, and a plurality of the first conductor lines 322 is also arranged approximately at regular intervals to be located side by side parallel to one another. In the present embodiment, the first conductor lines 321 and the first conductor lines 322 are orthogonal to one another, so that the first electrode patterns 320 are in a mesh-like shape that has a rectangular lattice shape.

In the present embodiment, the first conductor lines 321 and 322 are arranged to incline by 45° with respect to the extending direction of the first electrode patterns 320 (Y-axis direction in FIG. 2), but they may also be arranged to incline by another angle (e.g. 30°). One of the first conductor lines 321 and 322 may be arranged to incline by 90° with respect to the extending direction of the first electrode patterns 320 (Y-axis direction in FIG. 2).

In an embodiment, the first conductor lines 321 and 322 may extend in a specific form, such as a curved form, horseshoe-like form and zigzag form, and straight line-like portions and other portions, such as curved portions, horseshoe-like portions and zigzag portions, may be mixed. In the present embodiment, the first conductor lines 321 and 322 have approximately the same line width, but they may also have different line widths.

The width of such first conductor lines 321 and 322 is preferably 50 nm to 1000 $\mu$m, more preferably 500 nm to 150 $\mu$m, further preferably 1 $\mu$m to 10 $\mu$m, and furthermore preferably 1 $\mu$m to 5 $\mu$m.

The shape of unit meshes of the mesh constituted by the first conductor lines 321 and 322 is not particularly limited. For example, the shape of unit meshes may have a certain geometrical pattern as below. That is, the shape of unit meshes of the mesh constituted by the first conductor lines 321 and 322 may be a triangle, such as a regular triangle, isosceles triangle and right triangle, and may also be a quadrangle, such as a parallelogram and trapezoid. The shape of unit meshes may also be an n-polygon, such as a hexagon, octagon, dodecagon and icosagon, circle, ellipsoid, and star-shape.

In the present embodiment, edge parts 320a of the first electrode patterns 320 connected to the lead wires 324 have a wider width than that of the first conductor lines 321 and 322. Although not particularly illustrated, the first electrode patterns 320 may each have a frame part that surrounds at least a part of the mesh shape formed by the first conductor lines 321 and 322. In the present embodiment, the first conductor lines 321 and 322, each edge part 320a, and each lead wire 324 are formed integrally. Although not particularly illustrated, the edge parts 320a and the lead wires 324 also have mesh shapes.

Each lead wire 324 and each first electrode pattern 320 may be separately formed. In this case, the lead wires 324 may be formed using a different method than that for the first electrode patterns 320. The edge parts 320a and the lead wires 324 may each be formed into a line-like solid pattern. The edge parts 320a may be omitted, in which case the first electrode patterns 320 are connected directly to the lead wires 324.

As illustrated in FIG. 4, a side part 323 of the first conductor lines 322 and a side part of the support parts 311 of the first resin layer 31 merge smoothly into each other thereby to form one flat surface. The first conductor lines 322 have a tapered shape that narrows toward the second conductor layer 34 side, so that the cross-sectional shape of the first conductor lines 322 (cross-sectional shape with respect to the extending direction of the first conductor lines 322) is approximately a trapezoidal shape. The cross-sectional shape of the first conductor lines 322 is not particularly limited to the above. For example, the cross-sectional shape of the first conductor lines 322 may be other shape, such as a square shape, rectangular shape, and triangular shape. In the present embodiment, the first conductor lines 321 also have the same cross-sectional shape as that of the first conductor lines 322.

An upper surface 325 in FIG. 4 (first facing surface) of the first conductor lines 322 of the present embodiment is a flat surface (smooth surface). This can suppress diffuse reflection of incident light from external. The upper surface 325 is located at the opposite side to the lower surface 326 of each first conductor line 322 (at a second conductor line 342 (which will be described later) side of each first conductor line 322). The upper surface 325 is substantially parallel to the main surface 21 of the substrate 2 (the upper surface of the flat plate-like part 312 of the first resin layer 31).

The upper surface 325 includes a flat part 3251 in the cross-section of the first conductor line 322 in its width direction. The flat part 3251 is a straight line-like portion (i.e. portion with a considerably large radius of curvature) that exists on the upper surface 325 in the cross-section of the first conductor line 322 in its width direction, and the flatness of the flat part 3251 is 0.5 $\mu$m or less. The flatness is defined by a JIS method (JIS B0621 (1984)).

In the present embodiment, the flatness of the flat part 3251 is obtained using a contactless-type measurement method with laser light. Specifically, a measuring object (the upper surface 325 in the present embodiment) is irradiated with strip-like laser light, and the reflected light is focused on an imaging element (e.g. two-dimensional CMOS) to measure the flatness. The method of calculating the flatness may be a method that includes setting flat surfaces on an object surface so as to pass through three points separate from one another as much as possible and calculating the maximum value of deviation as the flatness (maximum deviation-type flatness). The methods of measuring and calculating the flatness are not limited to the above. For example, the method of measuring the flatness may be a contact-type measurement method using a dial gauge or other appropriate gauge. The method of calculating the flatness may also be a method that includes interposing an object surface between parallel flat surfaces and calculating a value of space generated due to the interposition as the flatness (maximum slope-type flatness).

The flat part 3251 of the present embodiment is formed at approximately the entire area of the upper surface 325. The location at which the flat part 3251 is formed is not particularly limited to the above, and the flat part 3251 may be formed at a part of the upper surface 325. In this case, for example, the flat part may be formed at a region that does not include both ends of the upper surface. When the flat part is formed at a part of the upper surface, the width of the flat part may be at least 1/2 or more of the width of the upper surface.

Each side part 323 is located between the upper surface 325 and the lower surface 326. The side part 323 connects to the upper surface 325 at a first portion 3231 and connects to the lower surface 326 at a second portion 3232. Since the first conductor line 322 of the present embodiment has a tapered shape that narrows toward the second conductor layer 34 side, the second portion 3232 is located outside the first portion 3231 in the cross-section of the first conductor line 322 in its width direction. In the cross-section of the first conductor line 322 in its width direction, the side part 323 of the present embodiment represents a surface that extends on a virtual straight line (not illustrated) passing through the first and second portions 3231 and 3232.

The shape of the side part 323 is not particularly limited to the above. For example, the side part 323 may be in an arc shape that protrudes outward in the cross-section of the first conductor line 322 in its width direction. In this case, the side part 323 exists outside the virtual straight line passing through the first and second portions 3231 and 3232. In other words, the shape of the side part 323 may preferably be a shape in which a part of the side part 323 does not exist inside the virtual straight line passing through the first and second portions 3231 and 3232, in the cross-section of the first conductor line 322 in its width direction. For example, when the outer shape of the first conductor line gradually becomes larger as approaching the resin layer in the cross-section of the first conductor line in its width direction, if the side part is in an arc shape that protrudes inward (i.e., if the first conductor line is in a divergent shape with its spread bottom), the light incident to the wiring body for a touch sensor may readily undergo diffuse reflection.

The side part 323 of the present embodiment includes a flat part 3233 in the cross-section of the first conductor line 322 in its width direction. The flat part 3233 is a straight line-like portion (i.e. portion with a considerably large radius of curvature) that exists on the side part 323 in the cross-section of the first conductor line 322 in its width direction, and the flatness of the flat part 3233 is 0.5 $\mu$m or less. The flatness of the flat part 3233 can be measured in the same manner as in the method of measuring the flatness of the flat part 3251. In the present embodiment, the flat part 3233 is formed at approximately the entire area of the side part 323. The shape of the flat part 3233 is not particularly limited to the above, and the flat part 3233 may be formed at a part of the side part 323.

From the viewpoint of suppressing the diffuse reflection of light at the side part 323, an angle $\theta_1$ between the side part 323 and the upper surface 325 is preferably 90° to 170° ($90° \leq \theta_1 \leq 170°$) and more preferably 90° to 120° ($90° \leq \theta_1 \leq 120°$). In the present embodiment, in one first conductor line 322, the angle between one side part 323 and the upper surface 325 is substantially the same as the angle between the other side part 323 and the upper surface 325. In one first conductor line 322, the angle between one side part 323 and the upper surface 325 may be different from the angle between the other side part 323 and the upper surface 325.

In the present embodiment, from the viewpoint of tightly fixing the first conductor line 322 to the first resin layer 31, the surface roughness of the lower surface 326 in FIG. 4 of the first conductor line 322 is preferably rougher than the surface roughness of the upper surface 325 in FIG. 4 (first facing surface) of the first conductor lines 322. Since the upper surface 325 includes the flat part 3251 in the present embodiment, the above relative relationship of the surface roughness in the first conductor line 322 (relationship that the surface roughness of the lower surface 326 is relatively rougher than the surface roughness of the upper surface 325) is established. Specifically, the surface roughness Ra of the lower surface 326 of the first conductor line 322 is preferably about 0.1 $\mu$m to 3 $\mu$m while the surface roughness Ra of the upper surface 325 is preferably about 0.001 $\mu$m to 1.0 $\mu$m. The surface roughness Ra of the lower surface 326 of the first conductor line 322 is more preferably 0.1 $\mu$m to 0.5 $\mu$m, and the surface roughness Ra of the upper surface 325 is furthermore preferably 0.001 $\mu$m to 0.3 $\mu$m. The ratio of the surface roughness of the upper surface 325 and the surface roughness of the lower surface 326 (ratio of the surface roughness of the upper surface 325 to the surface roughness of the lower surface 326) is preferably 0.01 or more and less than 1 and more preferably 0.1 or more and less than 1. The surface roughness of the upper surface 325 is preferably 1/5 or less of the width (maximum width) of the first conductor line 322. Such surface roughness can be measured in accordance with a JIS method (JIS B0601 (revised on March 21, 2013)). Measurement of the surface roughness of the upper surface 325 and the lower surface 326 may be performed along the width direction of the first conductor line 322 and may also be performed along the extending direction of the first conductor line 322.

As used herein, the "surface roughness Ra" refers to "arithmetic average roughness Ra" as described in the JIS method (JIS B0601 (revised on March 21, 2013)). The "arithmetic average roughness Ra" represents a roughness parameter that is obtained by shutting off long-wavelength components (waviness components) from a profile curve. Separation of the waviness components from the profile curve may be performed on the basis of the measurement condition which is necessary for obtaining a form (such as the size of an object, for example).

In the present embodiment, the side part 323 includes the flat part 3233. The surface roughness of the lower surface 326 is therefore relatively rougher than that of the side part 323. Specifically, the surface roughness Ra of the lower surface 326 of the first conductor line 322 is preferably 0.1 $\mu$m to 3 $\mu$m while the surface roughness Ra of the side part 323 is preferably 0.001 $\mu$m to 1.0 $\mu$m. The surface roughness Ra of the side part 323 is more preferably 0.001 $\mu$m to 0.3 $\mu$m. Measurement of the surface roughness of the side part 323 may be performed along the width direction of the first conductor line 322 and may also be performed along the extending direction of the first conductor line 322.

In the present embodiment, the surface roughness of the lower surface 326 is relatively rougher than the surface roughness of the upper surface 325 and side parts 323 and, therefore, the diffuse reflectance of the wiring body 3 for a touch sensor at other surfaces than the lower surface 326 (i.e. at the upper surface 325 and side parts 323) is relatively smaller than the diffuse reflectance of the wiring body 3 for a touch sensor at the lower surface 326. From the viewpoint of improving the visibility of the wiring body 3 for a touch sensor, the ratio of the diffuse reflectance of the wiring body 3 for a touch sensor at other surfaces than the lower surface 326 and the diffuse reflectance of the wiring body 3 for a touch sensor at the lower surface 326 (ratio of the diffuse reflectance of the wiring body 3 for a touch sensor at other surfaces than the lower surface 326 to the diffuse reflectance of the wiring body 3 for a touch sensor at the lower surface 326) is preferably 0.1 or more and less than 1 and more preferably 0.3 or more and less than 1.

An example of the shape of a first conductor line having the above-described relative relationship of the surface roughness between the lower surface and other surfaces than the lower surface will be described with reference to FIG. 7. As illustrated in FIG. 7, in a first conductor line 322B that is composed of conductive particles M and a binder resin B, a number of the conductive particles M are dispersed in the binder resin B. In a lower surface 326B of the first conductor line 322B, a part of the conductive particles M protrudes from the binder resin B in the cross-section in the width direction. The lower surface 326B therefore has an uneven shape. On the other hand, in an upper surface 325B and side parts 323B, the binder resin B gets into spaces between the conductive particles M, and the binder resin B covers the conductive particles M. Thus, the upper surface 325B includes a flat part 3251B, and the side parts 323B include flat parts 3233B. In the upper surface 325B and the side parts 323B, the conductive particles M are covered with the binder resin B, so that the electric insulation is improved between adjacent first conductor lines 322B and the occurrence of migration is suppressed.

In the form illustrated in FIG. 7, a part of the conductive particles M protrudes from the binder resin B at the lower surface 326B while the binder resin B covers the conductive particles M at the upper surface 325B. The surface roughness of the lower surface 326B is therefore relatively rougher than the surface roughness of the upper surface 325B. Similarly, the binder resin B covers the conductive particles M at the side parts 323B. The surface roughness of the lower surface 326B is therefore relatively rougher than the surface roughness of the side parts 323B. The form of the first conductor line having the relative relationship of the surface roughness between the upper surface and the lower surface (side parts) is not particularly limited to the above.

The basic structure of the first conductor lines 321 is the same as that of the above-described first conductor lines 322 except that the extending direction is different, so the detailed description will be omitted.

As illustrated in FIG. 4 to FIG. 6, the second resin layer 33 is a layer through which visible light can transmit and which is made of a UV-curable resin, such as an epoxy resin, acrylic resin, polyester resin, urethane resin, vinyl resin, silicone resin, phenol resin, and polyimide resin; a thermoset resin; or a thermoplastic resin.

As illustrated in FIG. 4 to FIG. 6, the second resin layer 33 is interposed between the first and second conductor layers 32 and 34 to electrically insulate them. The second resin layer 33 includes: a main part 331 that has an approximately flat upper surface and is provided to correspond to the entire area of the main surface 21 of the substrate 2; and protrusions 332 that are provided on the main part 331. As illustrated in FIG. 4 or FIG. 5, the main part 331 covers the first conductor layer 32 and covers the first resin layer 31 except its adhesion surfaces with the first electrode patterns 320. The protrusions 332, which protrude toward the second conductor layer 34 side (+Z-direction side), are formed to correspond to second electrode patterns 340 of the second conductor layer 34. The main part 331 and the protrusions 332 in the present embodiment are formed integrally.

As illustrated in FIG. 6, cross-sectional shapes of the protrusions 332 (cross-sectional shapes with respect to the extending direction of second conductor lines 342) in the present embodiment are each a shape that narrows toward a direction departing from the substrate 2 (+Z-direction in FIG. 6). By providing the protrusions 332 on the main part 331, the rigidity of the second conductor lines 342 is improved with the protrusions 332. Boundaries between the protrusions 332 and the second conductor lines 342 are in uneven shapes corresponding to uneven shapes of lower surfaces 346 of the second conductor lines 342. Such uneven shapes are formed due to the surface roughness of the lower surfaces 346 of the second conductor lines 342. As illustrated in FIG. 4, the boundary between each protrusion 332 and each second conductor line 342 in the cross-section along the extending direction of the second conductor line 342 is also in an uneven shape corresponding to the uneven shape of the lower surface 346 of the second conductor line 342. The surface roughness of the lower surfaces 346 will be described later in detail. For easy understanding of the wiring body 3 for a touch sensor in the present embodiment, FIG. 4 and FIG. 6 illustrate the uneven shapes of boundaries between the protrusions 332 and the second conductor lines 342 in an exaggerated manner. Although not particularly illustrated, like the boundaries between the protrusions 332 and the second conductor lines 342, boundaries between protrusions and second conductor lines 341 (which will be described later) are also in uneven shapes corresponding to the uneven shapes of lower surfaces of the second conductor lines 341.

The relative permittivity of the second resin layer 33 is preferably 3.0 to 4.0 and more preferably 3.2 to 3.5 from the viewpoint of reducing the thickness and improving the adhesion properties. If the relative permittivity of the second resin layer 33 is unduly high, the capacitive coupling between the first electrode patterns 320 and the second electrode patterns 340 will be strong to deteriorate the sensitivity. This deterioration of sensitivity can be compensated for by increasing the thickness of the second resin layer 33, but the large thickness of the second resin layer 33 will cause poor optical transparency. If the relative permittivity of the second resin layer 33 is unduly low, the adhesion strength cannot be maintained, and peeling may readily occur between the second resin layer 33 and the first resin layer 31. This is because, when the resin material which constitutes the second resin layer is made to have low permittivity, the amount of polar groups in the resin is reduced in general, but such a small amount of polar groups weakens the intermolecular force with the first resin layer 31. As used herein, the relative permittivity refers to a value that is measured using an impedance method at a measurement frequency of 1 MHz and a measurement temperature of 23°C.

The second conductor layer 34 is a layer that functions, for example, as electrodes of a touch sensor and lead wires connected electrically to the electrodes. Such a second conductor layer 34 may be made of the same material as the material which constitutes the above-described first conductor layer 32. The second conductor layer 34 may be formed by applying a conductive paste and curing it. As illustrated in FIG. 3, the second conductor layer 34 in the present embodiment includes the second electrode patterns 340, which extend along the X-axis direction in FIG. 3, and second lead wires 344 that are connected to the second electrode patterns 340. In the present embodiment, four second electrode patterns 340 are arranged approximately at regular intervals along the Y-axis direction in FIG. 3. In the present embodiment, two second electrode patterns 340 disposed at the +Y-direction side in FIG. 3 are connected to the lead wires 344 at the -X-direction side in FIG. 3, and the remaining two second electrode patterns 340 disposed at the -Y-direction side in FIG. 3 are connected to the lead wires 344 at the +X-direction side in FIG. 3. The number and arrangement of the second electrode patterns included in the second conductor layer 34 are not particularly limited to the above.

The second electrode patterns 340 each have second conductor lines 341 and 342. As illustrated in FIG. 3, the second conductor lines 341 extend in a linear fashion, and the second conductor lines 342 also extend in a linear fashion. A plurality of the second conductor lines 341 is arranged approximately at regular intervals to be located side by side parallel to one another, and a plurality of the second conductor lines 342 is also arranged approximately at regular intervals to be located side by side parallel to one another. In the present embodiment, the second conductor lines 341 and the second conductor lines 342 are orthogonal to one another, so that the second electrode patterns 340 are in a mesh-like shape that has a rectangular lattice shape. In the present embodiment, the unit lattice which constitutes the mesh shape of the first electrode patterns 320 has approximately the same shape as that of the unit lattice which constitutes the mesh shape of the second electrode patterns 340, but the present invention is not limited to this.

In the present embodiment, the second conductor lines 341 and 342 are arranged to incline by 45° with respect to the extending direction of the second electrode patterns 340 (X-axis direction in FIG. 3), but they may also be arranged to incline by another angle (e.g. 30°). One of the second conductor lines 341 and 342 may be arranged to incline by 90° with respect to the extending direction of the second electrode patterns 340 (X-axis direction in FIG. 3).

In an embodiment, the second conductor lines 341 and 342 may extend in a specific form, such as a curved form, horseshoe-like form and zigzag form, and straight line-like portions and other portions, such as curved portions, horseshoe-like portions and zigzag portions, may be mixed. The angle formed by the second conductor lines 341 and the second conductor lines 342 is not particularly limited to the right angle. In the present embodiment, the second conductor lines 341 and 342 have approximately the same line width, but they may also have different line widths.

Like the width of the first conductor lines 321 and 322, the width of the second conductor lines 341 and 342 is preferably 50 nm to 1000 $\mu$m, more preferably 500 nm to 150 $\mu$m, further preferably 1 $\mu$m to 10 $\mu$m, and furthermore preferably 1 $\mu$m to 5 $\mu$m.

The shape of unit meshes of the mesh constituted by the second conductor lines 341 and 342 is not particularly limited. For example, the shape of unit meshes may have a certain geometrical pattern as below. That is, the shape of unit meshes of the mesh constituted by the second conductor lines 341 and 342 may be a triangle, such as a regular triangle, isosceles triangle and right triangle, and may also be a quadrangle, such as a parallelogram and trapezoid. The shape of unit meshes may also be an n-polygon, such as a hexagon, octagon, dodecagon and icosagon, circle, ellipsoid, and star-shape.

In the present embodiment, edge parts 340a of the second electrode patterns 340 connected to the lead wires 344 have a wider width than that of the second conductor lines 341 and 342. Although not particularly illustrated, the second electrode patterns 340 may each have a frame part that surrounds at least a part of the mesh shape formed by the second conductor lines 341 and 342. In the present embodiment, the second conductor lines 341 and 342, each edge part 340a, and each lead wire 344 are formed integrally. Although not particularly illustrated, the edge parts 340a and the lead wire 344 also have mesh shapes.

Each lead wire 344 and each second electrode pattern 340 may be separately formed. In this case, the lead wires 344 may be formed using a different method than that for the second electrode patterns 340. The edge parts 340a and the lead wires 344 may each be formed into a line-like solid pattern. The edge parts 340a may be omitted. In this case, the second electrode patterns 340 are connected directly to the lead wires 344.

In the present embodiment, it is preferred that the width $W_1$ of the first electrode patterns 320 (see FIG. 3) be 3 mm to 10 mm, and the width $W_2$ of the second electrode patterns 340 (see FIG. 3) be 0.5 mm to 2 mm. In general, on the assumption of the use as a touch sensor, when the width $W_2$ of the second electrode patterns, which function as detection electrodes of the upper layer, is narrow, the fringe field strength increases to improve the sensitivity while the response speed decreases because the electric resistance of wires increases. When the width $W_1$ of the first electrode patterns 320, which function as drive electrodes, is made within the above range so as to be relatively wide, the width $W_2$ of the second electrode patterns 340 can fall within the above range in which sufficient detection sensitivity can be ensured. In addition, when the width $W_2$ of the second electrode patterns 340 falls within the above range, the electric resistance of wires can be more reduced (40 $\Omega$/sq or less as the sheet resistance). Thus, when the width $W_1$ of the first electrode patterns 320 is 3 mm to 10 mm and the width $W_2$ of the second electrode patterns 340 is 0.5 mm to 2 mm, a touch sensor can be obtained which is more excellent both in the detection sensitivity and the responsiveness.

In the present embodiment, the surface area of a region $S_1$ (see FIG. 3) at which each first electrode pattern 320 overlaps each second electrode pattern 340, that is, $W_1 \times W_2$, is preferably 3 mm$^2$ to 12 mm$^2$. On the assumption of the use as a touch sensor, the surface area of the region $S_1$ within the above range improves the balance between the fringe field strength and the electric resistance of wirings, and the touch sensor can have excellent detection sensitivity and responsiveness.

As illustrated in FIG. 6, a side part 343 of the second conductor lines 342 and a side part of the protrusions 332 of the second resin layer 33 merge smoothly into each other thereby to form one flat surface. The second conductor lines 342 have a tapered shape that narrows toward the side departing from the first conductor layer 32 (+Z-direction side in FIG. 6), so that the cross-sectional shape of the second conductor lines 342 (cross-sectional shape with respect to the extending direction of the second conductor lines 342) is approximately a trapezoidal shape. The cross-sectional shape of the second conductor lines 342 is not particularly limited to the above. For example, the cross-sectional shape of the second conductor lines 342 may be other shape, such as a square shape, rectangular shape, and triangular shape. In the present embodiment, the second conductor lines 341 also have the same cross-sectional shape as that of the second conductor lines 342.

An upper surface 345 in FIG. 6 of the second conductor lines 342 of the present embodiment is a flat surface (smooth surface). This can suppress diffuse reflection of incident light from external. The upper surface 345 is located at the opposite side to the lower surface 346 of each second conductor line 342. The upper surface 345 is substantially parallel to the main surface of the substrate 2 (the upper surface of the flat plate-like part 312 of the first resin layer 31 and the upper surface of the main part 331 of the second resin layer 33).

The upper surface 345 includes a flat part 3451 in the cross-section of the second conductor line 342 in its width direction. The flat part 3451 is a straight line-like portion (i.e. portion with a considerably large radius of curvature) that exists on the upper surface 345 in the cross-section of the second conductor line 342 in its width direction, and the flatness of the flat part 3451 is 0.5 $\mu$m or less. The flatness of the flat part 3451 can be measured in the same manner as in the above-described method of measuring the flatness of the flat part 3251.

The flat part 3451 of the present embodiment is formed at approximately the entire area of the upper surface 345. The location at which the flat part 3451 is formed is not particularly limited to the above, and the flat part 3451 may be formed at a part of the upper surface 345. In this case, for example, the flat part may be formed at a region that does not include both ends of the upper surface. When the flat part is formed at a part of the upper surface, the width of the flat part may be at least 1/2 or more of the width of the upper surface.

Each side part 343 is located between the upper surface 345 and the lower surface 346. The side part 343 connects to the upper surface 345 at a first portion 3431 and connects to the lower surface 346 at a second portion 3432. Since the second conductor line 342 of the present embodiment has a tapered shape that narrows toward the side departing from the first conductor layer 32, the second portion 3432 is located outside the first portion 3431 in the cross-section of the second conductor line 342 in its width direction. In the cross-section of the second conductor line 342 in its width direction, the side part 343 represents a surface that extends on a virtual straight line (not illustrated) passing through the first and second portions 3431 and 3432.

The shape of the side part 343 is not particularly limited to the above. For example, the side part 343 may be in an arc shape that protrudes outward in the cross-section of the second conductor line 342 in its width direction. In this case, the side part 343 exists outside the virtual straight line passing through the first and second portions 3431 and 3432. In other words, the shape of the side part 343 may preferably be a shape in which a part of the side part 343 does not exist inside the virtual straight line passing through the first and second portions 3431 and 3432, in the cross-section of the second conductor line 342 in its width direction. For example, when the outer shape of the second conductor line gradually becomes larger as approaching the resin layer in the cross-section of the second conductor line in its width direction, if the side part is in an arc shape that protrudes inward (i.e., if the second conductor line is in a divergent shape with its spread bottom), the light incident to the wiring body for a touch sensor may readily undergo diffuse reflection.

The side part 343 of the present embodiment includes a flat part 3433 in the cross-section of the second conductor line 342 in its width direction. The flat part 3433 is a straight line-like portion (i.e. portion with a considerably large radius of curvature) in the cross-section of the second conductor line 342 in its width direction, and the flatness of the flat part 3433 is 0.5 $\mu$m or less. The flatness of the flat part 3433 can be measured in the same manner as in the above-described method of measuring the flatness of the flat part 3251. In the present embodiment, the flat part 3433 is formed at approximately the entire area of the side part 343. The shape of the flat part 3433 is not particularly limited to the above, and the flat part 3433 may be formed at a part of the side part 343.

From the viewpoint of suppressing the diffuse reflection of light at the side part 343, an angle $\theta_2$ between the side part 343 and the upper surface 345 is preferably 90° to 170° (90°$\leq\theta_2\leq$170°) and more preferably 90° to 120° (90°$\leq\theta_2\leq$120°). In the present embodiment, in one second conductor line 342, the angle between one side part 343 and the upper surface 345 is substantially the same as the angle between the other side part 343 and the upper surface 345. In one second conductor line 342, the angle between one side part 343 and the upper surface 345 may be different from the angle between the other side part 343 and the upper surface 345.

In the present embodiment, the upper surface 325 in FIG. 4 of the first conductor line 322 includes the flat part 3251, and the upper surface 345 in FIG. 6 of the second conductor line 342 includes the flat part 3451. It is therefore possible to more suppress the diffuse reflection of incident light from external. From the viewpoint of tightly fixing the second conductor line 342 to the second resin layer 33, the surface roughness of the lower surface 346 in FIG. 6 of the second conductor line 342 is preferably rougher than the surface roughness of the upper surface 345 in FIG. 6 of the second conductor lines 342. Since the upper surface 345 includes the flat part 3451 in the present embodiment, the above relative relationship of the surface roughness in the second conductor line 342 (relationship that the surface roughness of the lower surface 346 is relatively rougher than the surface roughness of the upper surface 345) is established. Specifically, the surface roughness Ra of the lower surface 346 (second facing surface) of the second conductor line 342 is preferably about 0.1 $\mu$m to 3 $\mu$m while the surface roughness Ra of the upper surface 345 is preferably about 0.001 $\mu$m to 1.0 $\mu$m. The surface roughness Ra of the lower surface 346 of the second conductor line 342 is more preferably 0.1 $\mu$m to 0.5 $\mu$m, and the surface roughness Ra of the upper surface 345 is furthermore preferably 0.001 $\mu$m to 0.3 $\mu$m. The ratio of the surface roughness of the upper surface 345 and the surface roughness of the lower surface 346 (ratio of the surface roughness of the upper surface 345 to the surface roughness of the lower surface 346) is preferably 0.01 or more and less than 1 and more preferably 0.1 or more and less than 1. The surface roughness of the upper surface 345 is preferably 1/5 or less of the width (maximum width) of the second conductor line 342. Such surface roughness can be measured in accordance with a JIS method (JIS B0601 (revised on March 21, 2013)). Measurement of the surface roughness of the upper surface 345 and the lower surface 346 may be performed along the width direction of the second conductor line 342 and may also be performed along the extending direction of the second conductor line 342.

In the present embodiment, the side part 343 includes the flat part 3433. The surface roughness of the lower surface 346 is therefore relatively rougher than that of the side part 343. Specifically, the surface roughness Ra of the lower surface 346 of the second conductor line 342 is preferably 0.1 $\mu$m to 3 $\mu$m while the surface roughness Ra of the side part 343 is preferably 0.001 $\mu$m to 1.0 $\mu$m. The surface roughness Ra of the side part 343 is more preferably 0.001 $\mu$m to 0.3 $\mu$m. Measurement of the surface roughness of the side part 343 may be performed along the width direction of the second conductor line 342 and may also be performed along the extending direction of the second conductor line 342.

In the present embodiment, the surface roughness of the lower surface 346 is relatively rougher than the surface roughness of the upper surface 345 and side parts 343 and, therefore, the diffuse reflectance of the wiring body 3 for a touch sensor at other surfaces than the lower surface 346 (i.e. at the upper surface 345 and side parts 343) is relatively smaller than the diffuse reflectance of the wiring body 3 for a touch sensor at the lower surface 346. The ratio of the diffuse reflectance of the wiring body 3 for a touch sensor at other surfaces than the lower surface 346 and the diffuse reflectance of the wiring body 3 for a touch sensor at the lower surface 346 (ratio of the diffuse reflectance of the wiring body 3 for a touch sensor at other surfaces than the lower surface 346 to the diffuse reflectance of the wiring body 3 for a touch sensor at the lower surface 346) is preferably 0.1 or more and less than 1 and more preferably 0.3 or more and less than 1 from the viewpoint of improving the visibility of the wiring body 3 for a touch sensor.

A similar shape to that of the first conductor line 322B illustrated in FIG. 7 can be exemplified as an example of the shape of a second conductor line that has the above-described relative relationship of the surface roughness between the lower surface and other surfaces than the lower surface. This will be described in more detail. In the lower surface of the second conductor line, a part of the conductive particles protrudes from the binder resin in the cross-section of the second conductor line in its width direction. On the other hand, in the upper surface and side parts of the second conductor line, the binder resin gets into spaces between the conductive particles in the cross-section of the second conductor line in its width direction, and the binder resin covers the conductive particles. In this case, the lower surface has an uneven shape, and the upper surface includes a flat part. The surface roughness of the lower surface of the second conductor line is therefore relatively rougher than the surface roughness of the upper surface of the second conductor line. In this example, the side parts of the second conductor line also include flat parts. The surface roughness of the lower surface of the second conductor line is therefore relatively rougher than the surface roughness of the side parts of the second conductor line.

The basic structure of the second conductor lines 341 is the same as that of the second conductor lines 342 except that the extending direction is different, so the detailed description will be omitted.

As illustrated in FIG. 4, the wiring board 1 for a touch sensor in the present embodiment satisfies Expressions (5) to (9) below:

$$D_1 < D_2 \ …(5),$$

$$D_1 < D_2 \leq 50D_1 \ …(6),$$

$$T_1 \leq D_2 \leq 125T_1 \ …(7),$$

$$|H_1 - H_2| < T_1/3 \ …(8),$$

and

$$|H_3 - H_4| < T_2/3 \ …(9).$$

In the above Expressions (5) and (6), $D_1$ is a thickness of the first resin layer 31 in a first region E1 corresponding to the first conductor line 322 (average thickness in the first region E1) in a first predetermined cross-section (cross-section corresponding to FIG. 4) that crosses the wiring body 3 for a touch sensor along the second conductor line 342, and $D_2$ is a thickness of the second resin layer 33 in the first region E1 of the first predetermined cross-section (average thickness in the first region E1).

In the above Expression (7), $T_1$ is a thickness of the first conductor line 322 in the first predetermined cross-section (average thickness in the first predetermined cross-section).

In the above Expression (8), $H_1$ is a maximum height of the second conductor line 342 in the first region E1 of the first predetermined cross-section (average maximum height from an average plane S of the first conductor line 322 in the first region E1), and $H_2$ is a minimum height of the second conductor line 342 in a second region E2 that is adjacent to the first region E1 and has the same width as that of the first region E1 in the first predetermined cross-section (average minimum height from the average plane S of the first conductor line 322 in the second region E2).

In the above Expression (9), $H_3$ is a maximum height of the second resin layer 33 in a third region E3 corresponding to the first conductor line 322 (average maximum height from the average plane S of the first conductor line 322 in the third region E3) in a second predetermined cross-section of the wiring body 3 for a touch sensor (cross-section corresponding to FIG. 5) that crosses the second resin layer exposed from the second conductor layer 34, $H_4$ is a minimum height of the second resin layer 33 in a fourth region E4 that is adjacent to the third region E3 and has the same width as that of the third region E3 in the second predetermined cross-section (average minimum height from the average plane S of the first conductor line 322 in the fourth region E4), and $T_2$ is a thickness of the first conductor line 322 in the second predetermined cross-section (average thickness in the second predetermined cross-section).

As used herein, the "average thickness in the first region E1" refers to a value obtained through sampling a plurality of the first cross-sections across the entire wiring board 1 for a touch sensor and averaging thicknesses obtained for respective cross-sections. Similarly, the "average thickness in the first predetermined cross-section," the "average maximum height from an average plane S of the first conductor line 322 in the first region E1," and the "average minimum height from the average plane S of the first conductor line 322 in the second region E2" refer to values obtained through sampling a plurality of the first cross-sections across the entire wiring board 1 for a touch sensor and averaging thicknesses, maximum heights, and minimum heights obtained for respective cross-sections. Similarly, the "average maximum height from the average plane S of the first conductor line 322 in the third region E3," the "average minimum height from the average plane S of the first conductor line 322 in the fourth region E4," and the "average thickness in the second predetermined cross-section" refer to values obtained through sampling a plurality of the second cross-sections across the entire wiring board 1 for a touch sensor and averaging maximum heights, minimum heights, and thicknesses obtained for respective cross-sections.

The wiring board 1 for a touch sensor may not necessarily satisfy the above Expressions (6) to (9), but it is preferred for the wiring board 1 for a touch sensor to satisfy Expressions (6) to (9).

The above thickness $D_1$ is preferably 0.5 $\mu$m to 100 $\mu$m, more preferably 5 $\mu$m to 100 $\mu$m, and further preferably

50 $\mu$m to 100 $\mu$m. The above thickness $D_2$ is preferably 30 $\mu$m to 500 $\mu$m, more preferably 100 $\mu$m to 400 $\mu$m, and further preferably 200 $\mu$m to 300 $\mu$m.

The above thicknesses $T_1$ and $T_2$ are preferably 100 nm to 20 $\mu$m, and more preferably 500 nm to 10 $\mu$m and further preferably 1 $\mu$m to 5 $\mu$m from the viewpoint of reducing the resistance value and improving the durability.

The heights $H_1$ and $H_2$ are preferably 30 $\mu$m to 500 $\mu$m, more preferably 100 $\mu$m to 400 $\mu$m, and further preferably 200 $\mu$m to 300 $\mu$m. The heights $H_3$ and $H_4$ are preferably 30 $\mu$m to 500 $\mu$m, more preferably 100 $\mu$m to 400 $\mu$m, and further preferably 200 $\mu$m to 300 $\mu$m. In such cases, it is possible to maintain the optical transparency of the wiring board 1 for a touch sensor while improving the electric characteristics. The value $|H_1-H_2|$ is preferably 5 $\mu$m or less, more preferably 3 $\mu$m or less, and further preferably 1 $\mu$m or less. The value $|H_3-H_4|$ is preferably 5 $\mu$m or less, more preferably 3 $\mu$m or less, and further preferably 1 $\mu$m or less. In such cases, the durability of the wiring body 3 for a touch sensor can be more improved.

The widths of the first conductor lines 321 and 322 and the second conductor lines 341 and 342 are preferably 100 nm to 100 $\mu$m, and further preferably 500 nm to 10 $\mu$m and more preferably 1 $\mu$m to 5 $\mu$m from the viewpoint of improving the visibility of the wiring board 1 for a touch sensor. The width of the lead wires 324 is preferably wider than the width of the first electrode patterns 320 from the viewpoint of reducing the resistance value and enhancing the optical transparency. Similarly, the width of the lead wires 344 is preferably wider than the width of the second electrode patterns 340.

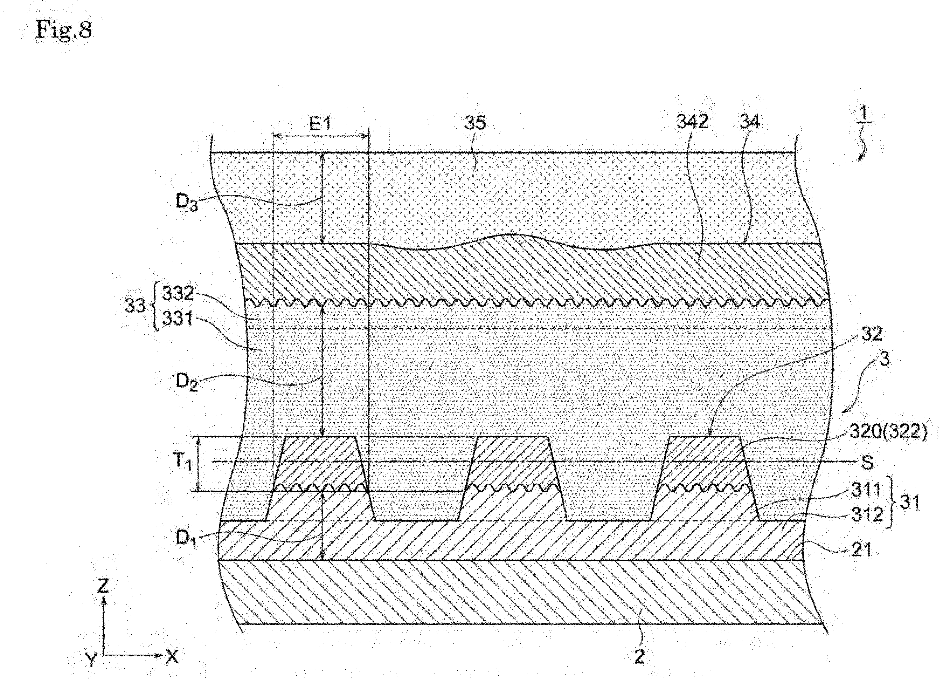

As illustrated in FIG. 8, in the wiring board 1 for a touch sensor, a third resin layer 35 may be provided on the second conductor layer 34 and the second resin layer 33. FIG. 8 is a cross-sectional view illustrating a modified example in an embodiment of the present invention, that is, a cross-sectional view corresponding to FIG. 4.

The third resin layer 35 is a layer for protecting the second conductor layer 34 or for allowing the wiring body 3 for a touch sensor to adhere to the base material of a display device, cover panel, etc. As illustrated in FIG. 8, the third resin layer 35 is provided on the entire area of the second conductor layer 34 and the second resin layer 33. When the third resin layer 35 is provided to protect the second conductor layer 34, examples of a material that constitutes the third resin layer 35 include, as in the first resin layer 31 and the second resin layer 33, a UV-curable resin, a thermoset resin, and a thermoplastic resin, such as an epoxy resin, acrylic resin, polyester resin, urethane resin, vinyl resin, silicone resin, phenol resin, and polyimide resin. When the third resin layer 35 is provided to allow the wiring body 3 for a touch sensor to adhere to the base material of a display device, cover panel, etc., acrylic-based and silicone-based pressure-sensitive adhesives can be exemplified.

The wiring board 1 for a touch sensor of FIG. 8 satisfies Expressions (10) and (11) below:

$$D_3 < D_2 \ \ldots (10)$$

and

$$D_1 \leq D_3 < D_2 \ \ldots (11).$$

In the above Expressions (10) and (11), $D_3$ is a thickness of the third resin layer 35 in the first region E1 of the first predetermined cross-section (average thickness in the first region E1).

The wiring board 1 for a touch sensor may not necessarily satisfy the above Expressions (10) and (11), but it is preferred for the wiring board 1 for a touch sensor to satisfy Expressions (10) and (11).

The above thickness $D_3$ is preferably 5 $\mu$m to 100 $\mu$m, more preferably 10 $\mu$m to 70 $\mu$m, and further preferably 20 $\mu$m to 50 $\mu$m.

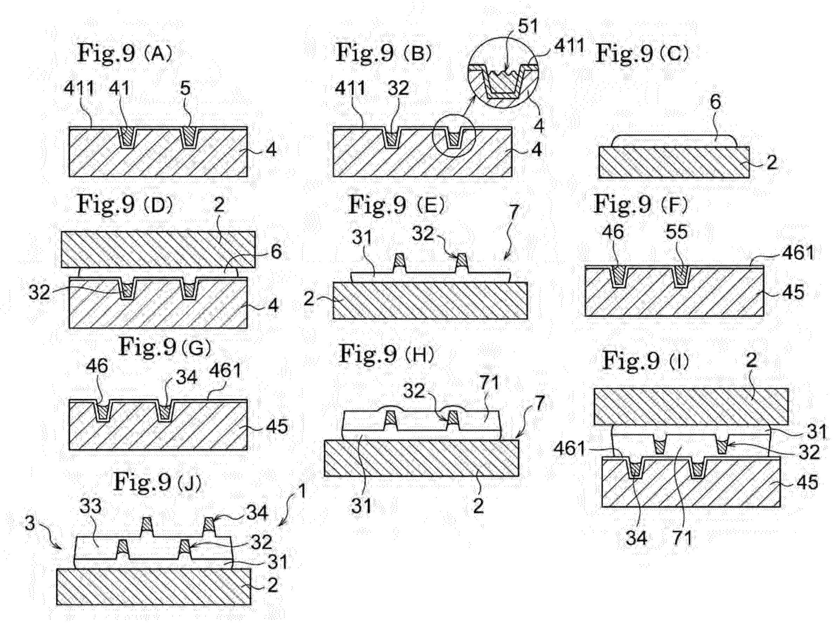

A production method for the wiring board 1 for a touch sensor in the present embodiment will then be described. FIG. 9(A) to FIG. 9(J) are cross-sectional views for describing the production method for the wiring board 1 for a touch sensor in the present embodiment.

First, as illustrated in FIG. 9(A), a first recessed plate 4 is prepared which is formed with recesses 41 having shapes corresponding to the shapes of the first electrode patterns 320 and lead wires 324 of the first conductor layer 32. Examples of a material that constitutes the first recessed plate 4 include nickel, silicon, silicon dioxide, organic silicas, glassy carbon, thermoplastic resin, and photo-curable resin. The widths of the recesses 41 are preferably 50 nm to 1000 $\mu$m, preferably 500 nm to 150 $\mu$m, further preferably 1 $\mu$m to 10 $\mu$m, and furthermore preferably 1 $\mu$m to 5 $\mu$m. The depths of the recesses 41 are preferably 50 nm to 3000 $\mu$m, more preferably 500 nm to 450 $\mu$m, and further preferably 500 nm to 10 $\mu$m. In the present embodiment, the cross-sectional shapes of the recesses 41 are each formed in a tapered shape that narrows toward the bottom part.

To improve releasability, it is preferred for the surfaces of the recesses 41 to be preliminarily formed with a release layer 411 composed of an appropriate material, such as a black lead-based material, silicone-based material, fluorine-based material, ceramic-based material, and aluminum-based material.

The recesses 41 of the above first recessed plate 4 are filled with a conductive material 5. The conductive paste as described above may be used as such a conductive material 5.

Examples of a method of filling the recesses 41 of the first recessed plate 4 with the conductive material 5 include a dispensing method, ink-jet method, and screen printing method. Another possible method may include coating with a conductive material, such as by a slit-coating method, bar-coating method, blade-coating method, dip-coating method, spray-coating method and spin-coating method, and then wiping, scratching, suctioning, peeling, washing, or blowing away the conductive material applied to other parts than the recesses. An appropriate method can be selected in accordance with the composition or the like of the conductive material and the shape or the like of the recessed plate.

Then, as illustrated in FIG. 9(B), the conductive material 5 which fills the recesses 41 of the first recessed plate 4 is heated to form conductor patterns that constitute the first conductor layer 32 (first step). A heating condition for the conductive material 5 can be appropriately set in accordance with the composition or the like of the conductive material. Due to this heat treatment, the conductive material 5 undergoes volume contraction. During this treatment, outer surfaces of the conductive material 5 other than the upper surfaces are formed into shapes that follow the recesses 41. On the other hand, upper surfaces of the conductor patterns are heated in a state of being in contact with the external atmosphere and therefore formed into uneven shapes 51 based on the shape of the conductive particles included in the conductive material 5 (see the enlarged view of FIG. 9(B)). The treatment method for the conductive material 5 is not limited to heating. The conductive material 5 may be irradiated with energy rays, such as infrared rays, ultraviolet rays and laser light, or may be simply dried. Two or more treatment methods as the above may be employed in combination. The existence of the uneven shapes 51 increases contact areas between the first conductor layer 32 and the first resin layer 31, and the first conductor layer 32 can be more tightly fixed to the first resin layer 31.

Subsequently, as illustrated in FIG. 9(C), preparation is performed such that the substrate 2 is approximately uniformly coated with an adhesive material 6 for forming the first resin layer 31. The above-described material which constitutes the first resin layer 31 may be used as such an adhesive material 6. Examples of a method of coating the substrate 2 with the adhesive material 6 include a screen printing method, spray-coating method, bar-coating method, dip method, and ink-jet method.

The method of forming the first resin layer 31 is not limited to the above. For example, the first resin layer 31 may be formed through coating the recessed plate 4 formed with the first conductor layer 32 (recessed plate 4 in the state illustrated in FIG. 9(B)) with the adhesive material 6, disposing the substrate 2 on the adhesive material 6, and thereafter curing the adhesive material 6 to form the first resin layer 31 in a state in which the substrate 2 is disposed above and pressed against the recessed plate 4. The curing method or the like for the adhesive material 6 can be appropriately set in accordance with the composition or the like of the adhesive material 6. The adhesive material 6 may be heated or simply dried or may also be irradiated with energy rays, such as infrared rays, ultraviolet rays and laser light. Two or more treatment methods as the above may be employed in combination. When a thermoplastic material is used as the adhesive material 6, the first resin layer 31 can be formed by melting the thermoplastic material, such as by heating, and then cooling it.

Then, as illustrated in FIG. 9(D), the substrate 2 and the adhesive material 6 are disposed on the first recessed plate 4 so that the adhesive material 6 gets into the recesses 41 of the first recessed plate 4, the substrate 2 is pressed against the first recessed plate 4, and the adhesive material 6 is cured (second step). Thus, the first resin layer 31 is formed and adheres to the substrate 2 and the first conductor layer 32 to fix them to each other.

Subsequently, as illustrated in FIG. 9(E), the substrate 2, the first resin layer 31, and the first conductor layer 32 are released from the first recessed plate 4, and an intermediate body 7 can thus be obtained (third step).

Next, as illustrated in FIG. 9(F), a second recessed plate 45 is prepared which is formed with recesses 46 having shapes corresponding to the shapes of the second electrode patterns 340 and lead wires 344 of the second conductor layer 34. Examples of a material that constitutes the second recessed plate 45 include those for the above-described first recessed plate 4. The widths of the recesses 46 are, as in the above-described recesses 41, preferably 50 nm to 1000 $\mu$m, preferably 500 nm to 150 $\mu$m, further preferably 1 $\mu$m to 10 $\mu$m, and furthermore preferably 1 $\mu$m to 5 $\mu$m. The depths of the recesses 46 are preferably 50 nm to 3000 $\mu$m, more preferably 500 nm to 450 $\mu$m, and further preferably 1 $\mu$m to 5 $\mu$m. In the present embodiment, the cross-sectional shapes of the recesses 46 are each formed in a tapered shape that narrows toward the bottom part. It is also preferred for the surfaces of the recesses 46 to be preliminarily formed with a release layer 461 like the release layer 411 for the recesses 41.

The recesses 46 of the above second recessed plate 45 are filled with a conductive material 55. The same material as the above-described conductive material 5 can be exemplified as the conductive material 55.

Examples of a method of filling the recesses 46 of the second recessed plate 45 with the conductive material 55 include a dispensing method, ink-jet method, and screen printing method. Another possible method may include coating with a conductive material, such as by a slit-coating method, bar-coating method, blade-coating method, dip-coating method, spray-coating method and spin-coating method, and then wiping, scratching, suctioning, peeling, washing, or blowing away the conductive material applied to other parts than the recesses. An appropriate method can be selected in accordance with the composition or the like of the conductive material and the shape or the like of the recessed plate.

Then, as illustrated in FIG. 9(G), the conductive material 55 which fills the recesses 46 of the second recessed plate 45 is heated to form conductor patterns that constitute the second conductor layer 34 (fourth step). A heating condition for the conductive material 55 can be appropriately set in accordance with the composition or the like of the conductive material. Due to this heat treatment, the conductive material 55 undergoes volume contraction, and outer surfaces of the conductive material 55 other than the upper surfaces are formed into shapes that follow the recesses 46. On the other hand, upper surfaces of the conductor patterns are formed into uneven shapes like the uneven shapes 51. The treatment method for the conductive material 55 is not limited to heating. The conductive material 55 may be irradiated with energy rays, such as infrared rays, ultraviolet rays and laser light, or may be simply dried. Two or more treatment methods as the above may be employed in combination. The conductor patterns are formed with uneven shapes like the uneven shapes 51 thereby to allow the contact areas to increase between the second conductor layer 34 and the second resin layer 33, and the second conductor layer 34 can be more tightly fixed to the second resin layer 33.

Subsequently, as illustrated in FIG. 9(H), the intermediate body 7 is coated with a resin material 71 that constitutes the second resin layer 33 (fifth step). The above-described material which constitutes the second resin layer 33 may be used as such a resin material 71. The viscosity of the material which constitutes the second resin layer 33 is preferably 1 mPa·s to 10,000 mPa·s from the viewpoint of ensuring sufficient flowability during the coating. The storage elastic modulus of the cured resin is preferably $10^6$ Pa or more and $10^9$ Pa or less from the viewpoint of durability of the first conductor layer 32 and the second conductor layer 34. Examples of a method of coating the intermediate body 7 with the resin material 71 include a screen printing method, spray-coating method, bar-coating method, dip method, and ink-jet method.

Then, as illustrated in FIG. 9(I), the intermediate body 7 and the resin material 71 are disposed on the second recessed plate 45 and the intermediate body 7 is pressed against the second recessed plate 45 so that the resin material 71 gets into the recesses 46 of the second recessed plate 45, and the resin material 71 is cured (sixth step). The pressing pressure when pressing the intermediate body 7 against the second recessed plate 45 is preferably 0.001 MPa to 100 MPa and more preferably 0.01 MPa to 10 MPa. The pressing can be performed, such as using pressure rollers. Thus, the second resin layer 33 is formed, and the intermediate body 7 and the second conductor layer 34 adhere to and are fixed to each other via the second resin layer 33.

Then, as illustrated in FIG. 9(J), the intermediate body 7, the second resin layer 33, and the second conductor layer 34 are released from the second recessed plate 45 (seventh step), and the wiring board 1 for a touch sensor comprising the wiring body 3 for a touch sensor in the present embodiment can thus be obtained.

The order of the above-described first to seventh steps is not particularly limited to the above. For example, the fourth step and the fifth step may be replaced by each other or they may be performed in parallel. When the third resin layer 35 is formed as illustrated in FIG. 8, after the above-described first to seventh steps are performed, a resin material that constitutes the third resin layer 35 may be applied onto the second resin layer 33 and the second conductor layer 34 and cured to form the third resin layer 35. Methods of forming the first resin layer 31, the second resin layer 33, and the third resin layer 35 may not be curing. For example, when thermoplastic resins are used as the first resin layer 31, the second resin layer 33, and the third resin layer 35, they may be formed by melting the thermoplastic resins and then cooling them.

Actions will then be described for the wiring board 1 for a touch sensor comprising the wiring body 3 for a touch sensor in the present embodiment and the production method for it.

The wiring board 1 for a touch sensor in the present embodiment satisfies the above Expression (5). This allows the distance between the first conductor line 322 and the second conductor line 342 to be long. It is thus possible to prevent the electric characteristics from deteriorating, and the wiring body 3 for a touch sensor can function well even though it has two or more conductive layers. Moreover, the film thicknesses of the wiring body 3 for a touch sensor and the wiring board 1 for a touch sensor can be reduced as a whole, because the first resin layer 31 is thinner than the second resin layer 33. In particular, when the wiring board 1 for a touch sensor is used in a touch sensor as in the present embodiment, contact with a contact body such as a finger allows the touch sensor to appropriately react to the contact body, because the line of electric force released can be prevented from being closed between the first conductor line 322 and the second conductor line 342. This results in improved ability of detection. Furthermore, a reduced film thickness of the wiring body 3 for a touch sensor as a whole can improve the optical transparency.

The wiring board 1 for a touch sensor in the present embodiment satisfies the above Expression (6). This can prevent the thickness $D_2$ of the second resin layer 33 from being unduly thick, and the film thicknesses of the wiring body 3 for a touch sensor and the wiring board 1 for a touch sensor can therefore be reduced as a whole.

The wiring board 1 for a touch sensor in the present embodiment satisfies the above Expression (7). Since the thickness $D_2$ of the second resin layer 33 is not smaller than the thickness $T_1$ of the first conductor line 322, it is possible to further prevent the electric characteristics from deteriorating. Moreover, the thickness $D_2$ can be prevented from being unduly thicker than the thickness $T_1$, and the thicknesses of the wiring body 3 for a touch sensor and the wiring board 1 for a touch sensor can thus be reduced as a whole.

The wiring board 1 for a touch sensor illustrated in FIG. 8 satisfies the above Expression (10). This can reduce the film thickness as a whole even when the third resin layer 35 is provided. In particular, when the wiring board 1 for a touch sensor is used in a touch panel, the optical transparency can also be improved.

In the wiring board 1 for a touch sensor of the present embodiment, the surface (upper surface 325) of the first conductor line 322 at the second conductor line 342 side includes the flat part 3251. This allows the distance between the first conductor line 322 and the second conductor line 342 to be constant. The electric characteristics can thus be improved.

In the production method for the wiring board 1 for a touch sensor in the present embodiment, the intermediate body 7 is produced first, in which the first conductor layer 32 is provided above the substrate 2 via the first resin layer 31 (see FIG. 9(E)). Then, the second conductor layer 34 is formed above the intermediate body 7. That is, the first and second conductor layers 32 and 34 are formed above one main surface 21 of one substrate 2. The thickness of the wiring board 1 for a touch sensor can therefore be reduced as compared with a wiring board configured such that a substrate formed with a single conductor layer on one surface and another substrate formed with a single conductor layer on one surface are attached to each other.

In a wiring board configured such that a substrate formed with a single conductor layer on one surface and another substrate formed with a single conductor layer on one surface are attached to each other, it is necessary to attach these substrates to each other with high positional accuracy. During this operation, if each substrate is provided with a conductive material and the conductive material is then heated to form a conductor layer, the heating may cause shape variation of the substrate and it may be difficult to align the two substrates with high accuracy.

In contrast, in the wiring board 1 for a touch sensor of the present embodiment, after filling the recesses 41 of the first recessed plate 4 with the conductive material 5 and heating it, the conductive material 5 is transferred onto the substrate 2 to form the first conductor layer 32 (see FIG. 9(A) to FIG. 9(E)). In addition, after filling the recesses 46 of the second recessed plate 45 with the conductive material 55 and heating it, the conductive material 55 is transferred onto the intermediate body 7 to form the second conductor layer 34. The first and second conductor layers 32 and 34 can therefore be formed without causing the shape variation of the substrate 2 due to heating of the conductive materials 5 and 55. It is thus easy to highly accurately align the first and second conductor layers 32 and 34.

In the production method of the present embodiment, the intermediate body 7 and the resin material 71 are disposed on the second recessed plate 45, the intermediate body 7 is pressed against the second recessed plate 45, and the resin material 71 is cured (see FIG. 9(I)). In the wiring board 1 for a touch sensor, therefore, the surface of the second resin layer 33 exposed from the second conductor layer 34 can be flat, so that the above Expression (9) is satisfied. This can suppress the breakage of the first conductor line 322 and the like due to stress concentration in the first conductor layer 32. The durability of the wiring board 1 for a touch sensor can thus be improved.

The first conductor line 322 of the present embodiment has a tapered shape that narrows toward the second conductor layer 34 side. This can improve the mechanical strength of the first conductor line 322 against the pressing force when pressing the intermediate body 7 to the second recessed plate 45 as compared with a case in which the first conductor line 322 is not formed with such a tapered shape and a case in which the first conductor line 322 is formed with a reversed tapered shape. Thus, the breakage of the first conductor line 322 is suppressed during the production, and the durability of the wiring board 1 for a touch sensor is further improved. In the present embodiment, the second conductor line 342 also has a similar tapered shape (tapered shape that narrows toward the side departing from the first conductor layer 32). This can improve the mechanical strength of the second conductor line 342 to suppress the breakage, and the durability of the wiring board 1 for a touch sensor can therefore be further improved.

The wiring board 1 for a touch sensor produced through the production method of the present embodiment satisfies the above Expression (8) because the second conductor layer 34 is formed to be approximately parallel to the main surface 21 of the substrate 2. This can avoid excessive stress concentration to the second conductor line 342 due to thermal shock and external force, and the durability of the wiring board 1 for a touch sensor can therefore be further improved.

In the wiring body 3 for a touch sensor of the present embodiment, attention is also focused on the relative relationship of the surface roughness (i.e. the roughness parameter obtained by shutting off the waviness components) between the lower surface 326 of the first conductor line 322 and other surfaces than the lower surface 326 (surfaces including the upper surface 325 and the side parts 323) in the cross-section of the first conductor line 322 in its width direction, and the surface roughness Ra of the lower surface 326 is relatively rougher than the surface roughness Ra of the other surfaces. This can suppress the diffuse reflection of incident light from external while allowing the first resin layer 31 to tightly adhere to the first conductor line 322. In particular, when the width of the first conductor line 322 is 1 $\mu$m to 5 $\mu$m, a remarkable effect can be obtained that the relative relationship of the surface roughness between the lower surface 326 and the other surfaces can satisfy the above-described relationship thereby to suppress the diffuse reflection of incident light from external while allowing the first resin layer 31 to tightly adhere to the first conductor line 322.

In the present embodiment, the side part 323 extends so as to coincide with the virtual line passing through the first and second portions 3231 and 3232. In this case, the side part is in a shape in which a part of the side part does not exist inside the virtual straight line passing through the first and second portions in the cross-section of the first conductor line 322 in its width direction, and the diffuse reflection of light incident from outside the wiring body 3 for a touch sensor is therefore suppressed. This can further improve the visibility of the wiring body 3 for a touch sensor.

In the present embodiment, the surface roughness Ra of the lower surface 326 is relatively rougher than the surface roughness Ra of other surfaces than the lower surface 326 (surfaces including the upper surface 325 and the side parts 323), and thereby the diffuse reflectance of the wiring body 3 for a touch sensor at the other surfaces is relatively smaller than the diffuse reflectance of the wiring body 3 for a touch sensor at the lower surface 326. Here, when the diffuse reflectance of the wiring body 3 for a touch sensor is small, the first conductor line 322 can be avoided from being reflected to be white, and the contrast degradation can be suppressed in a region in which the first conductor line 322 is visible. It is thus possible to further improve the visibility of the wiring body 3 for a touch sensor of the present embodiment.

The basis structure of the first conductor line 321 and the second conductor lines 341 and 342 of the second conductor layer 34 is the same as that of the first conductor line 322. Accordingly, the wiring body 3 for a touch sensor includes the first conductor line 321 and the second conductor lines 341 and 342 and can thereby further obtain the above-described actions and effects.

Embodiments heretofore explained are described to facilitate understanding of the present invention and are not described to limit the present invention. It is therefore intended that the elements disclosed in the above embodiments include all design changes and equivalents to fall within the technical scope of the present invention.

For example, in the above-described embodiments, a metal material or a carbon-based material is used as the conductive material which constitutes the first and second conductor layers, but the present invention is not particularly limited to this, and a mixture of a metal material and a carbon-based material may also be used. In this case, in an example of the first conductor line 322, for example, the carbon-based material may be disposed at the upper surface 325 side of the first conductor line 322, and the metal material may be disposed at the lower surface 326 side. Conversely, the metal material may be disposed at the upper surface 325 side of the first conductor line 322, and the carbon-based material may be disposed at the lower surface 326 side.

In an embodiment, for example, the substrate 2 may be omitted from the wiring board 1 for a touch sensor in the above-described embodiments. In this case, the wiring body for a touch sensor or the wiring board for a touch sensor may be configured, for example, as a form in which a release sheet is provided on the lower surface of the first resin layer 31 and is released when the wiring body or the wiring board is mounted by adhesion to an object for mounting (such as a film, surface glass, polarization plate, and display). In this case, the object for mounting corresponds to an example of the support body of the present invention. The wiring body for a touch sensor or the wiring board for a touch sensor may be configured as a form in which the wiring body or the wiring board is mounted via the third resin layer 35 by adhesion to the above-described object for mounting. An adhesion layer (resin layer) may be interposed between the wiring board for a touch sensor (wiring body for a touch sensor) and the object for mounting. In this case, the wiring body for a touch sensor or the wiring board for a touch sensor may be configured as a form in which a resin layer is further provided to cover the wiring body for a touch sensor from the first resin layer side and the wiring body or the wiring board is mounted via the resin layer by adhesion to the object for mounting. The wiring body for a touch sensor or the wiring board for a touch sensor may be configured as a form in which a resin layer is provided to cover the wiring body for a touch sensor from the second conductor layer side and the wiring body or the wiring board is mounted via the resin layer by adhesion to the object for mounting. In these case, the object for mounting corresponds to an example of the support body of the present invention.

The wiring body for a touch sensor or the wiring board for a touch sensor may be configured such that the substrate 2 is omitted from the above-described embodiments and the first resin layer 31 serves also as the support body. In this case, the same effects as in the above-described embodiments can also be obtained.

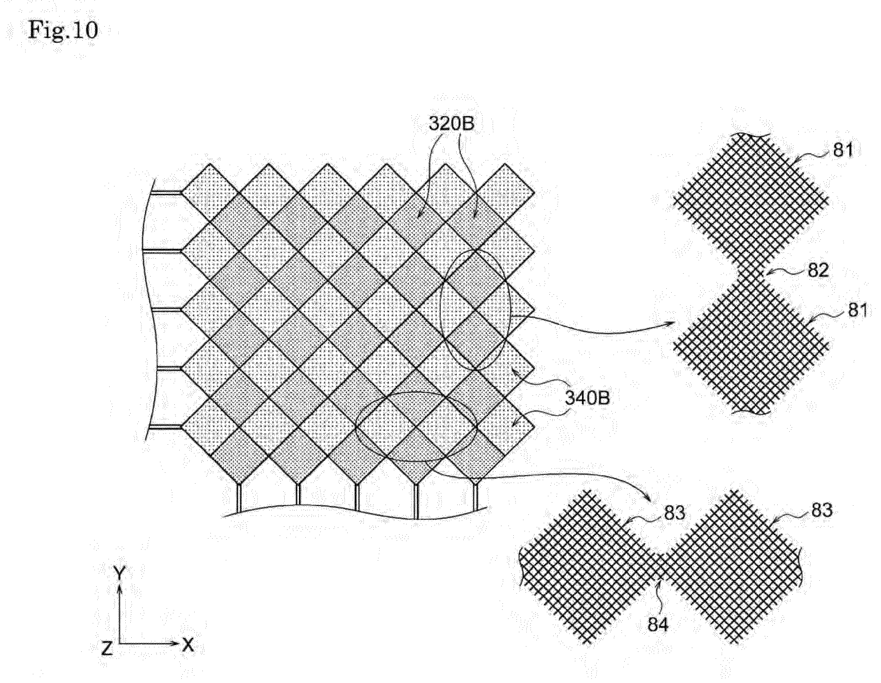

First electrode patterns in the first conductor layer 32 and second electrode patterns in the second conductor layer 34 may be, for example, in a form as illustrated in FIG. 10.

In the example of FIG. 10, each of first electrode patterns 320B includes a plurality of rectangular parts 81 and connection parts 82 that connect between the rectangular parts 81. The rectangular parts 81 are arranged such that diagonal lines are in line along the Y-axis direction in FIG. 10 approximately at regular intervals in the Y-axis direction. The connection parts 82 connect corner parts of adjacent rectangular parts 81. The rectangular parts 81 and the connection parts 82 have a mesh shape composed of a plurality of conductor lines.

Each of Second electrode patterns 340B includes a plurality of rectangular parts 83 and connection parts 84 that connect between the rectangular parts 83. The rectangular parts 83 are arranged such that diagonal lines are in line along the X-axis direction in FIG. 10 approximately at regular intervals in the X-axis direction. The connection parts 84 connect corner parts of adjacent rectangular parts 83. The rectangular parts 83 and the connection parts 84 also have a mesh shape composed of a plurality of conductor lines. The first electrode patterns 320B are arranged approximately at regular intervals along the X-axis direction in FIG. 10 while the second electrode patterns 340B are arranged approximately at regular intervals along the Y-axis direction in FIG. 10. The first electrode patterns 320B and the second electrode patterns 340B cross one another at the connection parts 82 and 84.

Also in this embodiment, the same effects as those described in the above embodiments can be obtained.

[Working Examples]

The effects of the present invention have been confirmed with reference to the following working examples in which the present invention is further specifically embodied. The following working examples are those for confirming whether the wiring body for a touch sensor and the wiring board for a touch sensor in the above-described embodiments function well.

<Working Example 1>

In Working Example 1, a wiring board 1 for a touch sensor as illustrated in FIG. 1 to FIG. 4 was produced. The thickness of the substrate 2 was 75 $\mu$m. The line width of the first conductor lines 321 and 322 constituting the first electrode patterns 320 of the first conductor layer 32 was 2 $\mu$m, and the line width of the lead wires 324 was 10 $\mu$m. Similarly, in the second conductor layer 34, the line width of the second conductor lines 341 and 342 constituting the second electrode patterns 340 was 2 $\mu$m, and the line width of the lead wires 344 was 10 $\mu$m. The height (thickness) $T_1$ of the first conductor lines 321 and 322 was 3 $\mu$m. Similarly, the height (thickness) of the second conductor lines 341 and 342 was 3 $\mu$m. A PET film was used as the substrate 2, and a thermoset silver (Ag) paste was used as the conductive material 5. The thickness $D_1$ of the first resin layer 31 was 15 $\mu$m, and the thickness $D_2$ of the second resin layer 33 was 60 $\mu$m. Acrylic resin was used as the first resin layer 31 and the second resin layer 33. Acrylic-based UV-curable resin was used as the adhesive material 6 for forming the first resin layer 31 and the resin material 71 constituting the second resin layer 33.

In this working example, the produced wiring board 1 for a touch sensor was used to configure a touch sensor such that end parts of the lead wires 324 and 344 were connected to an external circuit and the external circuit was operated to transmit pulse signals. Then, a human finger was randomly brought into contact with the touch sensor from the substrate 2 side 10 times, and the number of responses to the human finger was determined.

<Working Example 2>

In Working Example 2, a test sample was produced in the same manner as in Working Example 1 except that the thickness $D_2$ of the second resin layer 33 was 25 $\mu$m.

<Working Example 3>

In Working Example 3, a test sample was produced in the same manner as in Working Example 1 except that the thickness $D_1$ of the first resin layer 31 was 50 $\mu$m.

<Working Example 4>

In Working Example 4, a test sample was produced in the same manner as in Working Example 1 except that the thickness $D_1$ of the first resin layer 31 was 70 $\mu$m and the thickness $D_2$ of the second resin layer 33 was 250 $\mu$m.

<Comparative Example 1>

In Comparative Example 1, a test sample was produced in the same manner as in Working Example 1 except that the thickness $D_2$ of the second resin layer 33 was 15 $\mu$m which was the same as the thickness $D_1$ of the first resin layer 31.

Table 1 below lists the results of confirmation in terms of responsiveness as to whether the wiring body for a touch sensor and the wiring board for a touch sensor function well in each of the above Working Examples 1 to 4 and Comparative Example 1.

[Table 1]

Table 1

| | $D_1$ [μm] | $D_2$ [μm] | $D_1+D_2$ [μm] | Number of responses |
|---|---|---|---|---|
| Working Example 1 | 15 | 60 | 75 | 9 times |
| Working Example 2 | 15 | 25 | 40 | 7 times |
| Working Example 3 | 50 | 60 | 110 | 9 times |
| Working Example 4 | 70 | 250 | 320 | 10 times |
| Comparative Example 1 | 15 | 15 | 30 | 2 times |

From the above results, it has been found that the wiring board 1 for a touch sensor functions well in each of Working Examples 1 to 4. In particular, it has been found that the wiring board 1 for a touch sensor successfully functions well while reducing the film thickness of the wiring body for a touch sensor in each of Working Examples 1 and 3. Working Example 4 has been found that the wiring board 1 for a touch sensor most successfully functions well, but the film thickness is larger than those of Working Examples 1 and 3. In contrast, Comparative Example 1 has not been found that the wiring board 1 for a touch sensor functions well.

[Description of Reference Numerals]

1 Wiring board for a touch sensor

2 Substrate

21 Main surface

3 Wiring body for a touch sensor

31 First resin layer

311 Support part
312 Flat plate-like part

32 First conductor layer

320, 320B First electrode pattern
321, 322 First conductor line
323 Side part

3231 First portion
3232 Second portion
3233 Flat part

324 Lead wire
325 Upper surface (First facing surface)

3251 Flat part

326 Lower surface

33 Second resin layer

331 Main part
332 Protrusion

34 Second conductor layer

   340, 340B Second electrode pattern
   341, 342 Second conductor line
   343 Side part

      3431 First portion
      3432 Second portion
      3433 Flat part

   344 Lead wire
   345 Upper surface

      3451 Flat part

   346 Lower surface (Second facing surface)

35 Third resin layer

4 First recessed plate

   41 Recess

      411 Release layer

45 Second recessed plate

   46 Recess

      461 Release layer

5 Conductive material

   51 Uneven shape

55 Conductive material
6 Adhesive material
7 Intermediate body

   71 Resin material


**Claims**

1. A wiring body for a touch sensor, comprising:

   a first resin layer;
   a first conductor layer provided on the first resin layer and including a first conductor line;
   a second resin layer covering the first conductor layer; and
   a second conductor layer provided above the first conductor layer via the second resin layer and including a second conductor line, wherein
   the first and second conductor layers are electrically insulated by the second resin layer,
   a following Expression (1) is satisfied:

$$D_1 < D_2 \ \dots (1)$$

where $D_1$ is a thickness of the first resin layer in a first region corresponding to the first conductor line in a first predetermined cross-section that crosses the wiring body along the second conductor line, and $D_2$ is a thickness of the second resin layer in the first region of the first predetermined cross-section.

2. The wiring body for the touch sensor according to claim 1, wherein
the thickness $D_1$ is 0.5 to 100 $\mu$m, and
the thickness $D_2$ is 30 to 500 $\mu$m.

3. The wiring body for the touch sensor according to claim 1 or 2, further comprising a third resin layer covering the second conductor layer, wherein
a following Expression (2) is satisfied:

$$D_3 < D_2 \ \dots (2)$$

where $D_3$ is a thickness of the third resin layer in the first region of the first predetermined cross-section.

4. The wiring body for the touch sensor according to any one of claims 1 to 3, wherein
a following Expression (3) is satisfied:

$$T_1 \leq D_2 \leq 125 T_1 \ \dots (3)$$

where $T_1$ is a thickness of the first conductor line in the first predetermined cross-section.

5. The wiring body for the touch sensor according to any one of claims 1 to 4, wherein
the second resin layer has a relative permittivity of 3.0 to 4.0.

6. The wiring body for the touch sensor according to any one of claims 1 to 5, wherein
a surface of the first conductor line at the second conductor line side is flat.

7. The wiring body for the touch sensor according to any one of claims 1 to 6, wherein
a following Expression (4) is satisfied:

$$|H_1 - H_2| < T_1 / 3 \ \dots (4)$$

where $H_1$ is a maximum height of the second conductor line in the first region of the first predetermined cross-section, $H_2$ is a minimum height of the second conductor line in a second region that is adjacent to the first region and has same width as that of the first region in the first predetermined cross-section, and $T_1$ is a thickness of the first conductor line in the first predetermined cross-section.

8. The wiring body for the touch sensor according to any one of claims 1 to 7, wherein
the first conductor line has a tapered shape that narrows toward the second conductor layer side, and
the second conductor line has a tapered shape that narrows toward a side departing from the first conductor layer.

9. The wiring body for the touch sensor according to any one of claims 1 to 8, wherein
a surface roughness of a surface of the first conductor line opposite to a first facing surface facing the second conductor line is rougher than a surface roughness of the first facing surface and
a surface roughness of a second facing surface of the second conductor line facing the first conductor line is rougher than a surface roughness of a surface opposite to the second facing surface.

10. The wiring body for the touch sensor according to any one of claims 1 to 9, wherein
the first conductor layer has a first electrode pattern that includes the first conductor line and extends along a predetermined direction,
the second conductor layer has a second electrode pattern that includes the second conductor line and extends along a direction crossing the predetermined direction,

the first electrode pattern has a width of 3 to 10 mm, and
the second electrode pattern has a width of 0.5 to 2 mm.

11. The wiring body for the touch sensor according to claim 10, wherein
a surface area of a region at which the first electrode pattern and the second electrode pattern overlap each other in a plan view is 3 to 12 mm$^2$.

12. A wiring board for the touch sensor, comprising:

the wiring body for the touch sensor according to any one of claims 1 to 11; and
a support body supporting the wiring body for the touch sensor.

13. A touch sensor comprising the wiring board for the touch sensor according to claim 12.

Fig.1

Fig.2

Fig.3

Fig.4

Fig.5

Fig.6

Fig.7

322B
323B
3233B
311
312
21
2
325B
3251B
323B
M
B
3233B
326B

X
Z
Y

Fig.8

EP 3 264 243 A1

Fig.9 (A)
Fig.9 (B)
Fig.9 (C)
Fig.9 (D)
Fig.9 (E)
Fig.9 (F)
Fig.9 (G)
Fig.9 (H)
Fig.9 (I)
Fig.9 (J)

Fig.10

# EP 3 264 243 A1

| | **INTERNATIONAL SEARCH REPORT** | International application No. |
|---|---|---|
| | | PCT/JP2016/055902 |

**A. CLASSIFICATION OF SUBJECT MATTER**
*G06F3/044(2006.01)i, G06F3/041(2006.01)i*

According to International Patent Classification (IPC) or to both national classification and IPC

**B. FIELDS SEARCHED**

Minimum documentation searched (classification system followed by classification symbols)
G06F3/044, G06F3/041

Documentation searched other than minimum documentation to the extent that such documents are included in the fields searched
Jitsuyo Shinan Koho        1922–1996   Jitsuyo Shinan Toroku Koho   1996–2016
Kokai Jitsuyo Shinan Koho   1971–2016   Toroku Jitsuyo Shinan Koho   1994–2016

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 2013-20530 A (Dainippon Printing Co., Ltd.), 31 January 2013 (31.01.2013), paragraphs [0014], [0017], [0024], [0040], [0078] to [0088]; fig. 1 (Family: none) | 1-13 |
| Y | JP 2013-122745 A (Panasonic Corp.), 20 June 2013 (20.06.2013), paragraphs [0015], [0020] to [0057]; fig. 1 to 6 & US 2013/0122251 A1 paragraphs [0025] to [0087]; fig. 1 to 6 & CN 103105964 A | 3-13 |
| A | | 1-2 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 06 May 2016 (06.05.16) | 17 May 2016 (17.05.16) |

| Name and mailing address of the ISA/ Japan Patent Office 3-4-3,Kasumigaseki,Chiyoda-ku, Tokyo 100-8915,Japan | Authorized officer |
|---|---|
| | Telephone No. |

Form PCT/ISA/210 (second sheet) (January 2015)

**INTERNATIONAL SEARCH REPORT**

| International application No. |
| --- |
| PCT/JP2016/055902 |

C (Continuation).   DOCUMENTS CONSIDERED TO BE RELEVANT

| Category* | Citation of document, with indication, where appropriate, of the relevant passages | Relevant to claim No. |
| --- | --- | --- |
| Y<br>A | JP 2013-242724 A  (Showa Denko Kabushiki Kaisha),<br>05 December 2013 (05.12.2013),<br>paragraph [0063]<br>(Family: none) | 5-13<br>1-4 |
| Y<br>A | WO 2014/132780 A1  (Soken Chemical & Engineering Co., Ltd.),<br>04 September 2014 (04.09.2014),<br>paragraphs [0003], [0024]<br>& JP 5796126 B          & CN 105051141 A<br>& TW 201437307 A        & KR 10-2015-0123885 A | 5-13<br>1-4 |
| Y<br>A | JP 2013-246535 A  (Toray Advanced Film Co., Ltd.),<br>09 December 2013 (09.12.2013),<br>paragraph [0034]<br>(Family: none) | 5-13<br>1-4 |
| Y<br>A | JP 7-169635 A  (Matsushita Electric Industrial Co., Ltd.),<br>04 July 1995 (04.07.1995),<br>paragraphs [0001] to [0051]; fig. 1 to 4<br>& JP 2000-200730 A      & JP 2000-200728 A<br>& JP 2000-200729 A      & US 5609704 A<br>column 1, line 1 to column 7, line 15; fig. 1 to 4<br>& US 6310304 B1          & US 6378424 B1 | 8-13<br>1-7 |
| Y<br>A | JP 2013-171864 A  (Konica Minolta, Inc.),<br>02 September 2013 (02.09.2013),<br>paragraphs [0029] to [0030]<br>(Family: none) | 9-13<br>1-8 |
| Y<br>A | JP 2011-513846 A  (3M Innovative Properties Co.),<br>28 April 2011 (28.04.2011),<br>paragraph [0156]<br>& US 2009/0219257 A1    & US 2012/0194481 A1<br>& WO 2009/154812 A2<br>page 52, lines 26 to 30<br>& EP 2263141 A2          & CN 102016767 A<br>& TW 200943149 A        & KR 10-2012-0091408 A<br>& CN 104636016 A | 10-13<br>1-9 |
| Y<br>A | JP 2014-191441 A  (Fujifilm Corp.),<br>06 October 2014 (06.10.2014),<br>paragraph [0143]; fig. 9<br>& US 2016/0018932 A1<br>paragraph [0157]; fig. 8<br>& WO 2014/156364 A1      & TW 201443737 A<br>& CN 105074636 A | 10-13<br>1-9 |

Form PCT/ISA/210 (continuation of second sheet) (January 2015)

**INTERNATIONAL SEARCH REPORT**

International application No.

PCT/JP2016/055902

C (Continuation).    DOCUMENTS CONSIDERED TO BE RELEVANT

| Category* | Citation of document, with indication, where appropriate, of the relevant passages | Relevant to claim No. |
|---|---|---|
| A | JP 2012-168301 A  (Bridgestone Corp.), 06 September 2012 (06.09.2012), paragraphs [0019] to [0045]; fig. 1 to 2 (Family: none) | 1-13 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015038660 A
- JP 2015210477 A

- JP 2015501502 W